# EUROPEAN PATENT APPLICATION

(11) **EP 4 840 581 A1**
(43) Date of publication of application: **18.11.2026**
(21) Application number: 25897994.7
(22) Date of filing: 22.01.2025
(51) Int. Cl.: B23Q 13/00, B23Q 3/157

(54) **TOOL STORING DEVICE AND MACHINING TOOL**

(30) Priority: 26.11.2024 JP 2024205136
(71) Applicant: Yamazaki Mazak Corporation, Niwa-gun, Aichi 480-0197 (JP)
(72) Inventor: SANO, Katsuki, Niwa-gun, Aichi 480-0197 (JP); MORI, Yasukuni, Niwa-gun, Aichi 480-0197 (JP); HIROSE, Kenji, Niwa-gun, Aichi 480-0197 (JP); ARISUE, Kenji, Niwa-gun, Aichi 480-0197 (JP)
(74) Representative: TBK
(86) International application number: PCT/JP2025/001809
(87) International publication number: WO 2026/115749

(57) **Abstract**

A tool stocker includes a magazine, a first opening portion, a first door, and a tool temporary placement table. The magazine stores a plurality of tools respectively held by a plurality of holders movable along a first track. The first opening portion is defined in the magazine, and a first tool passes through the first opening portion when the first tool is carried into the magazine. The first door is configured to open and close the first opening portion. The tool temporary placement table includes a first support section configured to support the first tool. The tool temporary placement table is disposed to be lower than the first opening portion, and is supported by the magazine.

## Description

### Technical Field

The present invention relates to a tool stocker and a machine tool.

### Background Art

A tool stocker for stocking tools is known.

As a related technique, Patent Literature 1 discloses a multiple tool magazine apparatus. The multiple tool magazine apparatus recited in Patent Literature 1 includes a plurality of tool magazines. In addition, a forward tool magazine is arranged not to obstruct the front of a manual tool attachment/detachment position of a backward tool magazine.

### Citation List

### Patent Literature

PTL1: Microfilm of Japanese Utility Model Application No. H01-128172 (published as Japanese Utility Model Publication No. H03-65632).

### Summary of Invention

### Technical Problem

It is an object of the present invention to provide a tool stocker and a machine tool, which are capable of improving work efficiency of an operator.

### Solution to Problem

The present invention relates to a tool stocker and a machine tool to be described as follows.
(1) A tool stocker includes a magazine, a first opening portion, a first door, and a tool temporary placement table. The magazine stores a plurality of tools respectively held by a plurality of holders movable along a first track. The first opening portion is defined in the magazine, and a first tool passes through the first opening portion when the first tool is carried into the magazine. The first door is configured to open and close the first opening portion. The tool temporary placement table includes a first support section configured to support the first tool. The tool temporary placement table is disposed to be lower than the first opening portion, and is supported by the magazine.
(2) A machine tool includes a workpiece holder, a machining head, a mover, and a tool stocker. The workpiece holder supports a workpiece. The machining head is configured to hold a tool for machining the workpiece. The mover moves the machining head relative to the workpiece holder. The tool stocker includes a magazine, a first opening portion, a first door, and a tool temporary placement table. The magazine stores a plurality of tools respectively held by a plurality of holders movable along a first track. The first opening portion is defined in the magazine, and a first tool passes through the first opening portion when the first tool is carried into the magazine. The first door is configured to open and close the first opening portion. The tool temporary placement table includes a first support section configured to support the first tool. The tool temporary placement table is disposed to be lower than the first opening portion, and is supported by the magazine.

### Effects of Invention

The present invention provides a tool stocker and a machine tool that are capable of improving work efficiency of an operator.

### Brief Description of Drawings

[FIG. 1] FIG. 1 is a schematic perspective view of a tool stocker according to a first embodiment, schematically illustrating the tool stocker.
[FIG. 2] FIG. 2 is a schematic perspective view of the tool stocker according to the first embodiment, schematically illustrating the tool stocker.
[FIG. 3] FIG. 3 is a schematic perspective view of the tool stocker according to the first embodiment, schematically illustrating a part of the tool stocker.
[FIG. 4] FIG. 4 is a schematic perspective view of the tool stocker according to the first embodiment, schematically illustrating the tool stocker.
[FIG. 5] FIG. 5 is a schematic perspective view of the tool stocker according to the first embodiment, schematically illustrating the tool stocker.
[FIG. 6] FIG. 6 is a schematic perspective view of the tool stocker according to the first embodiment, schematically illustrating the tool stocker.
[FIG. 7] FIG. 7 is a schematic cross-sectional view of the tool stocker according to the first embodiment, schematically illustrating a part of the tool stocker.
[FIG. 8] FIG. 8 is a schematic perspective view of the tool stocker according to the first embodiment, schematically illustrating a part of the tool stocker.
[FIG. 9] FIG. 9 is a schematic cross-sectional view of the tool stocker according to the first embodiment, schematically illustrating a part of the tool stocker.
[FIG. 10] FIG. 10 is a schematic cross-sectional view of the tool stocker according to the first embodiment, schematically illustrating a part of the tool stocker.
[FIG. 11] FIG.11 is a schematic cross-sectional view of a tool stocker according to a first modification of the first embodiment, schematically illustrating a part of the tool stocker.
[FIG. 12] FIG. 12 is a schematic perspective view of a tool stocker according to a second modification of the first embodiment, schematically illustrating the tool stocker.
[FIG. 13] FIG. 13 is a schematic perspective view of a tool stocker according to a third modification of the first embodiment, schematically illustrating the tool stocker.
[FIG. 14] FIG. 14 is a schematic cross-sectional view of a tool stocker according to a third modification of the first embodiment, schematically illustrating a part of the tool stocker.
[FIG. 15] FIG. 15 is a schematic cross-sectional view of the tool stocker according to the third modification of the first embodiment, schematically illustrating a part of the tool stocker.
[FIG. 16] FIG. 16 is a schematic illustration of a part of the tool stocker according to the first embodiment.
[FIG. 17] FIG. 17 is a schematic perspective view of the tool stocker according to the first embodiment, schematically illustrating the tool stocker.
[FIG. 18] FIG. 18 is a diagram for describing a first mover.
[FIG. 19] FIG. 19 is a diagram for describing a second mover.
[FIG. 20] FIG. 20 is a schematic perspective view of a tool stocker according to a fourth modification of the first embodiment, schematically illustrating a part of the tool stocker.
[FIG. 21] FIG. 21 is a schematic cross-sectional view of a tool stocker according to a fifth modification of the first embodiment, schematically illustrating a part of the tool stocker.
[FIG. 22] FIG. 22 is a schematic cross-sectional view of the tool stocker according to the fifth modification of the first embodiment, schematically illustrating a part of the tool stocker.
[FIG. 23] FIG. 23 is a schematic perspective view of the tool stocker according to the fifth modification of the first embodiment, schematically illustrating the tool stocker.
[FIG. 24] FIG. 24 is a schematic cross-sectional view of a tool stocker according to a sixth modification of the first embodiment, schematically illustrating a part of the tool stocker.
[FIG. 25] FIG. 25 is a schematic cross-sectional view of the tool stocker according to the sixth modification of the first embodiment, schematically illustrating a part of the tool stocker.
[FIG. 26] FIG. 26 is a schematic perspective view of the tool stocker according to the sixth modification of the first embodiment, schematically illustrating the tool stocker.
[FIG. 27] FIG. 27 is a schematic perspective view of the tool stocker according to the sixth modification of the first embodiment, schematically illustrating the tool stocker.
[FIG. 28] FIG. 28 is a schematic illustration of a state in which a tool temporary placement table is pulled out from a storage space of a magazine.
[FIG. 29] FIG. 29 is a schematic illustration of a state in which the tool temporary placement table is stored in the storage space of the magazine.
[FIG. 30] FIG. 30 is a diagram for describing a lock component.
[FIG. 31] FIG. 31 is a diagram for describing a first example of an operation panel.
[FIG. 32] FIG. 32 is a diagram for describing a second example of the operation panel.
[FIG. 33] FIG. 33 is a diagram for describing the second example of the operation panel.
[FIG. 34] FIG. 34 is a diagram for describing the second example of the operation panel.
[FIG. 35] FIG. 35 is a diagram for describing the second example of the operation panel.
[FIG. 36] FIG. 36 is a view for describing an arrangement relationship between the operation panel and a first support section in a height direction.
[FIG. 37] FIG. 37 is a schematic perspective view of a machine tool according to a second embodiment, schematically illustrating the machine tool.
[FIG. 38] FIG. 38 is a schematic illustration of a part of the machine tool according to the second embodiment.
[FIG. 39] FIG. 39 is a schematic illustration of a state in which a controller is capable of controlling a plurality of to-be-controlled devices.

### Description of Embodiments

Hereinafter, by referring to the accompanying drawings, description will be made with regard to a tool stocker 1 and a machine tool 100 according to embodiments. It is to be noted that in the following description of the embodiments, identical reference numerals are used to denote identical portions, members, or components having identical functions, and redundant description of identical portions, members, or components will be prevented.

### (First Embodiment)

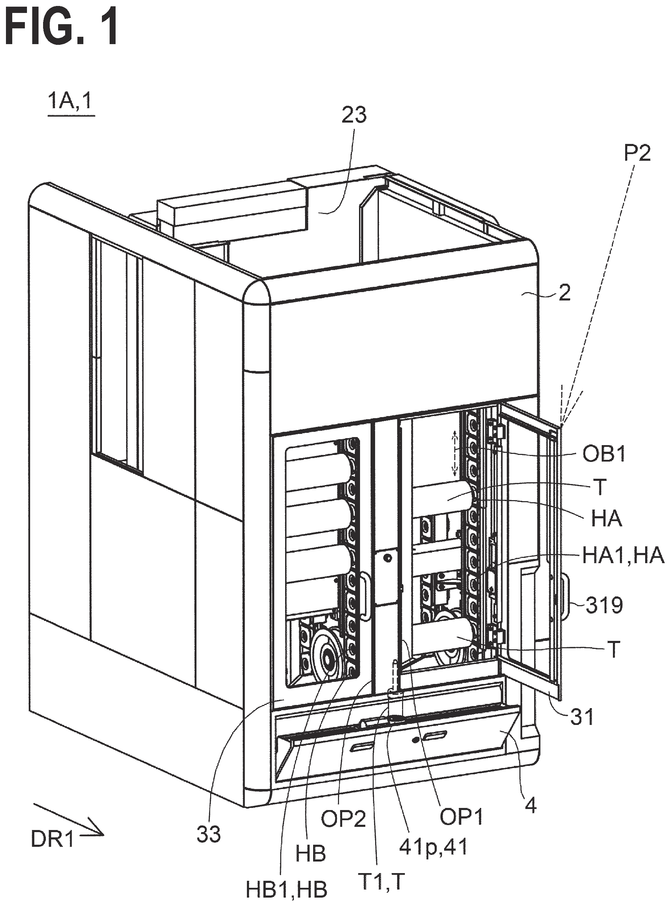

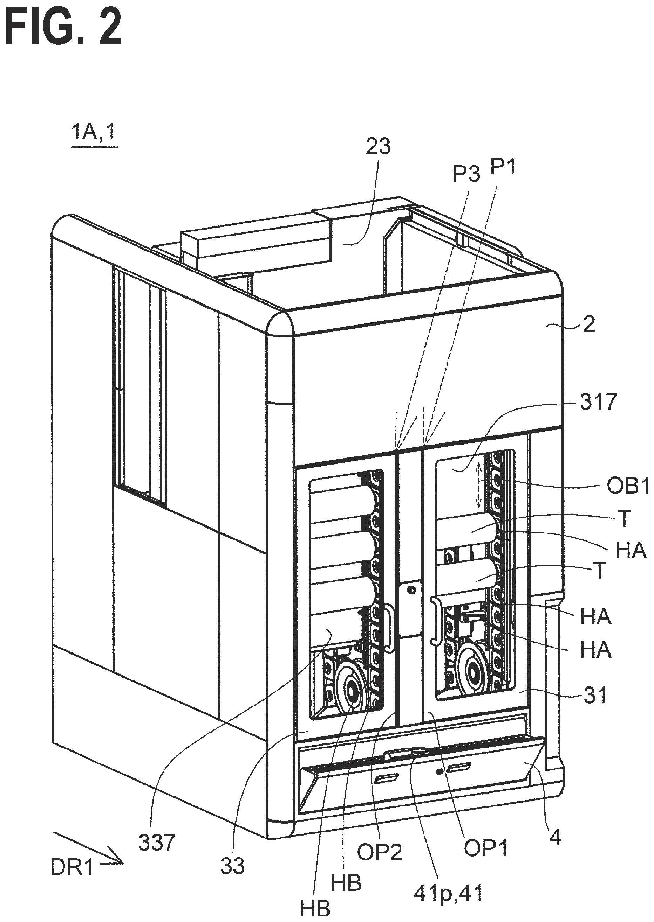

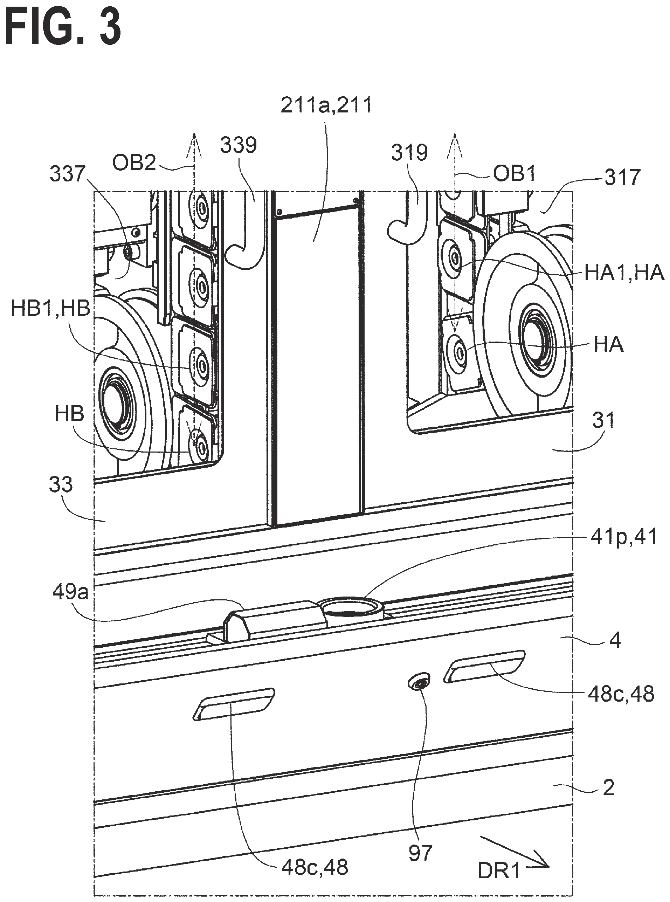

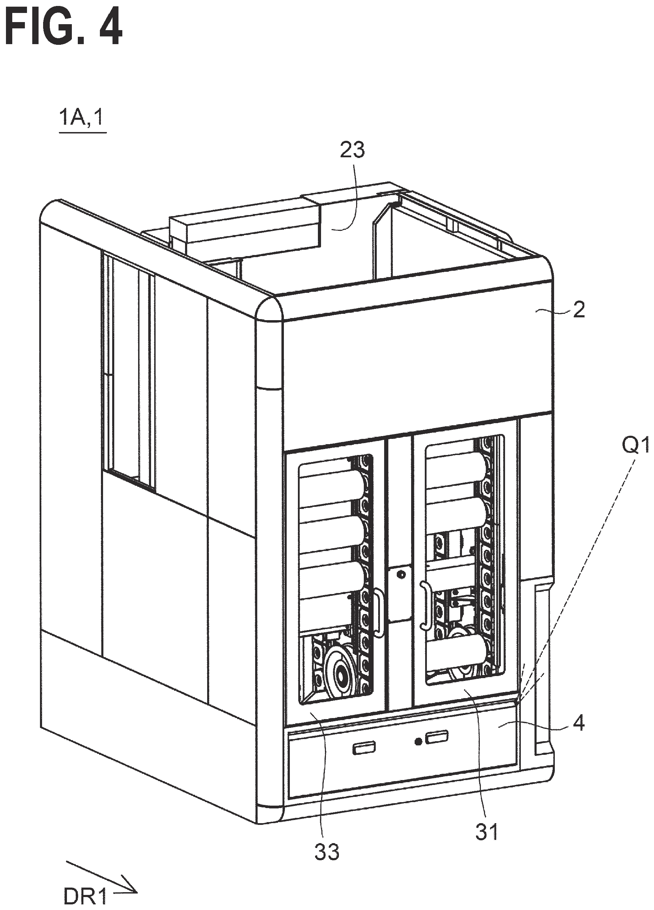

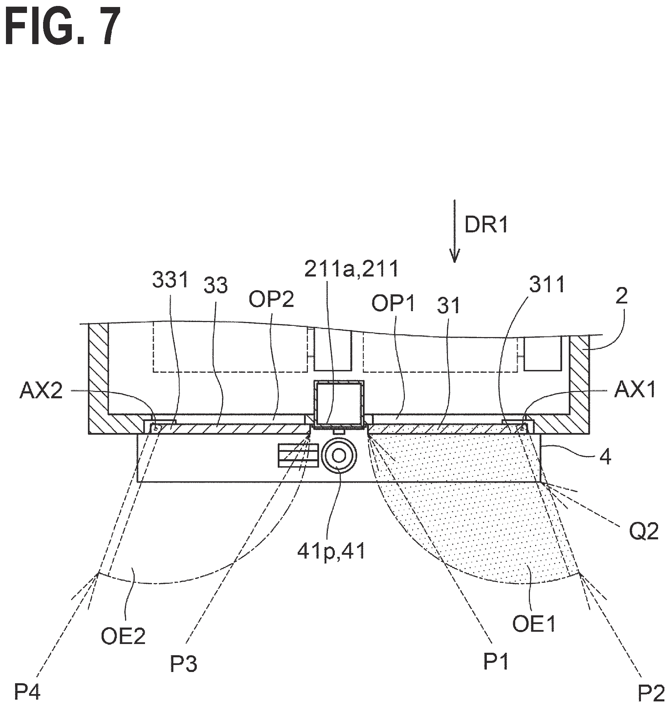

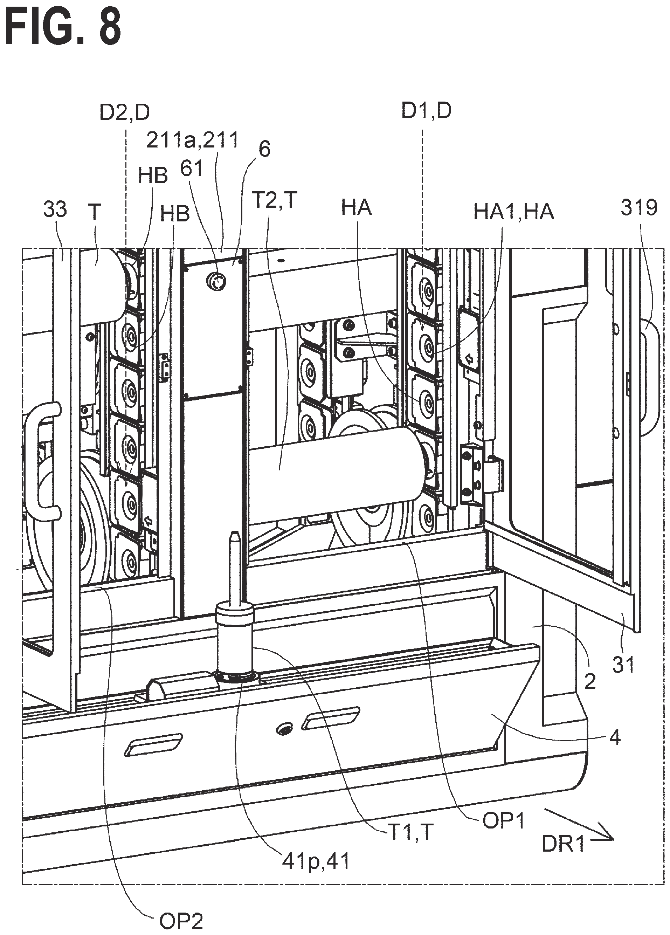

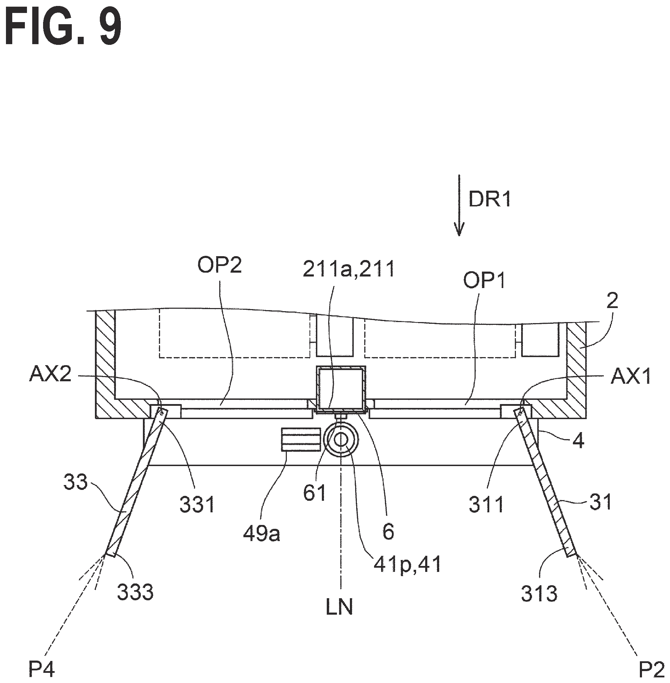

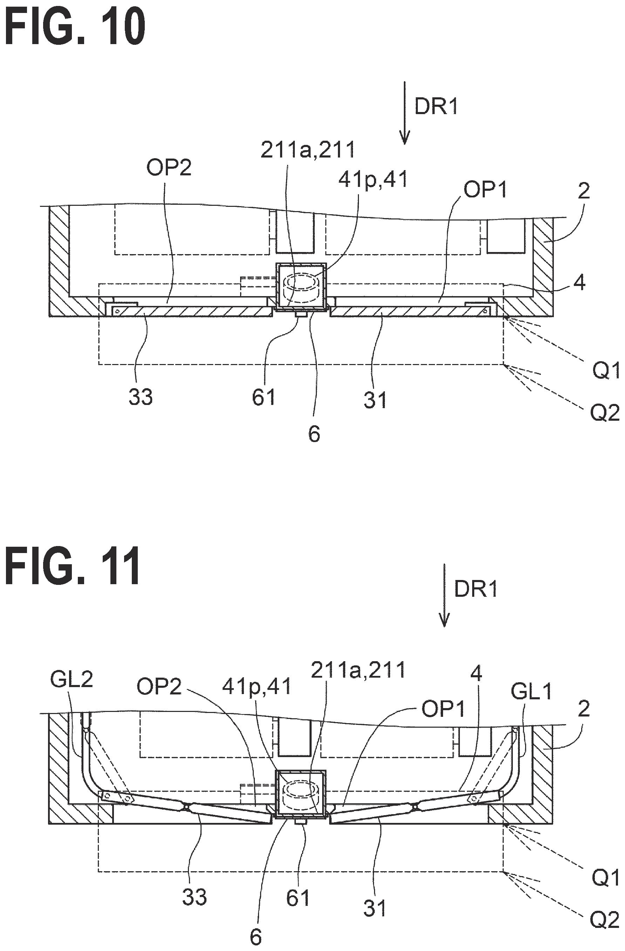

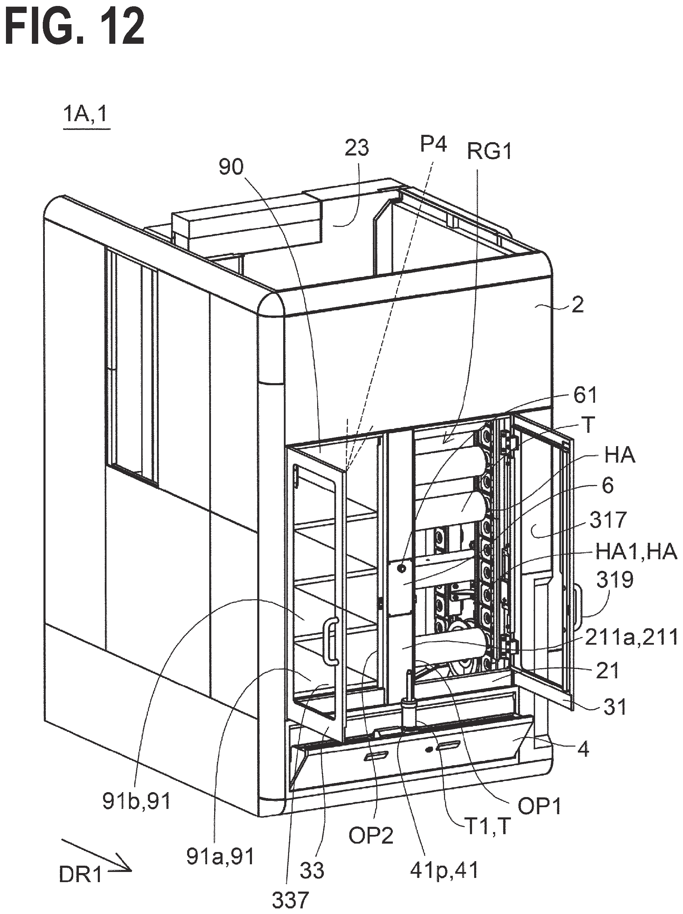

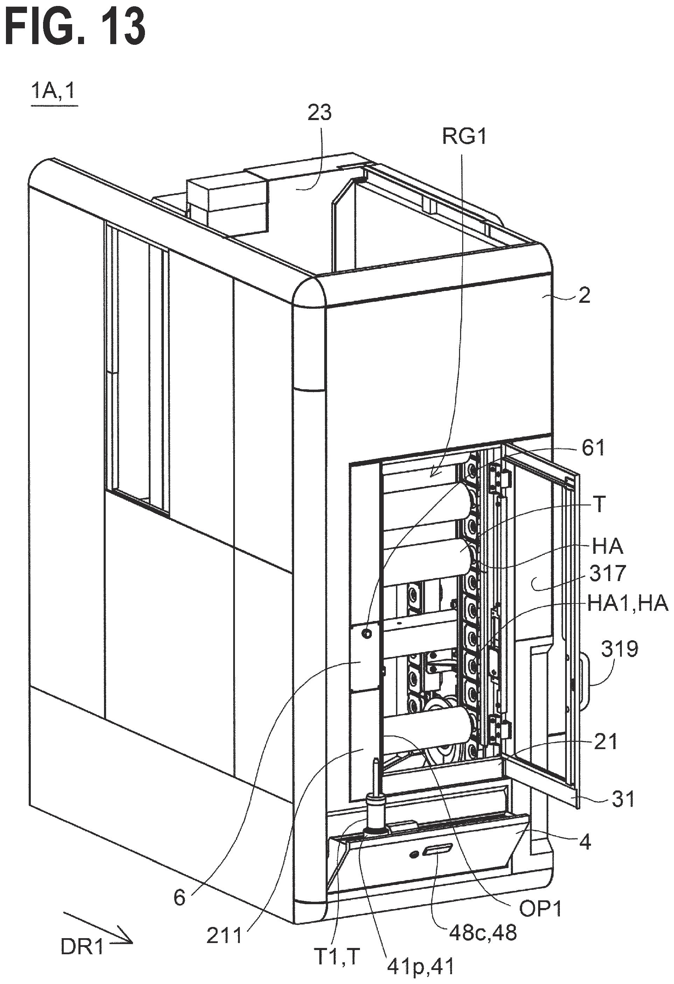

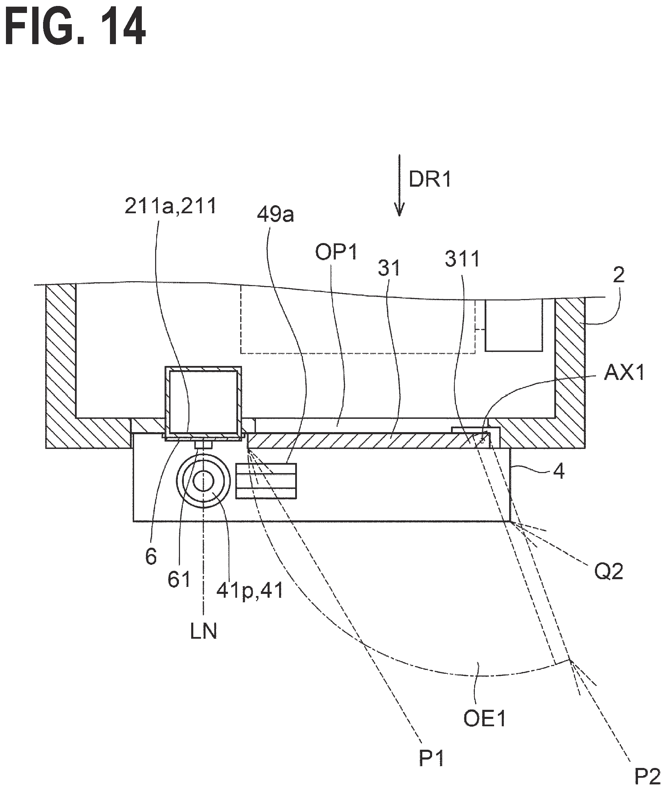

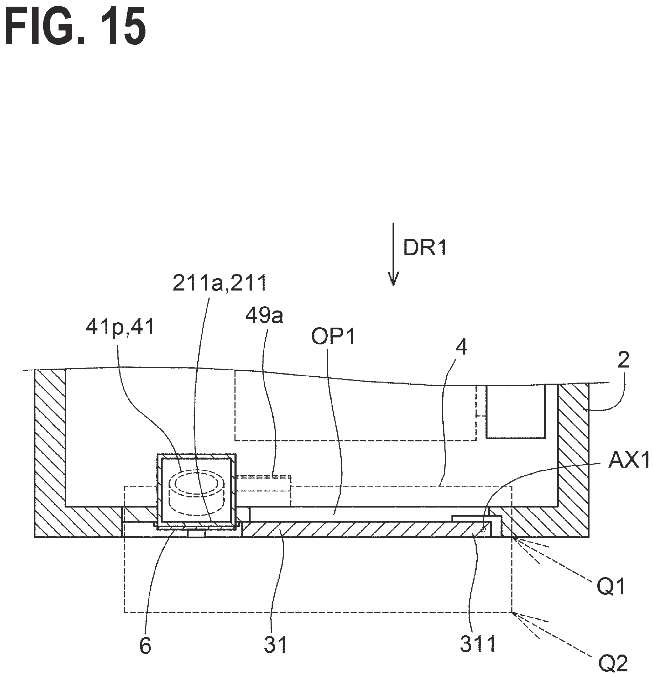

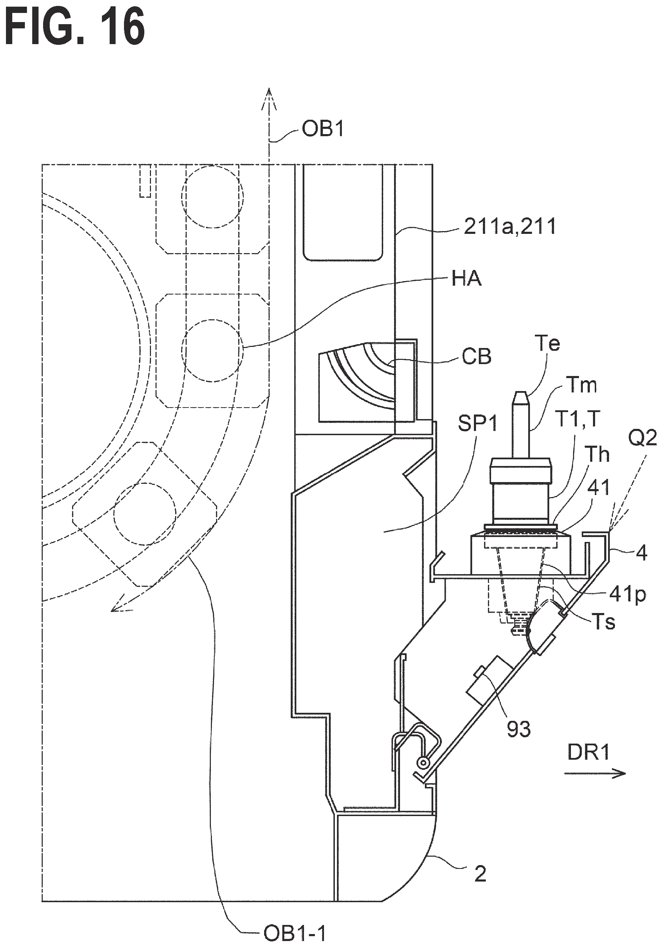

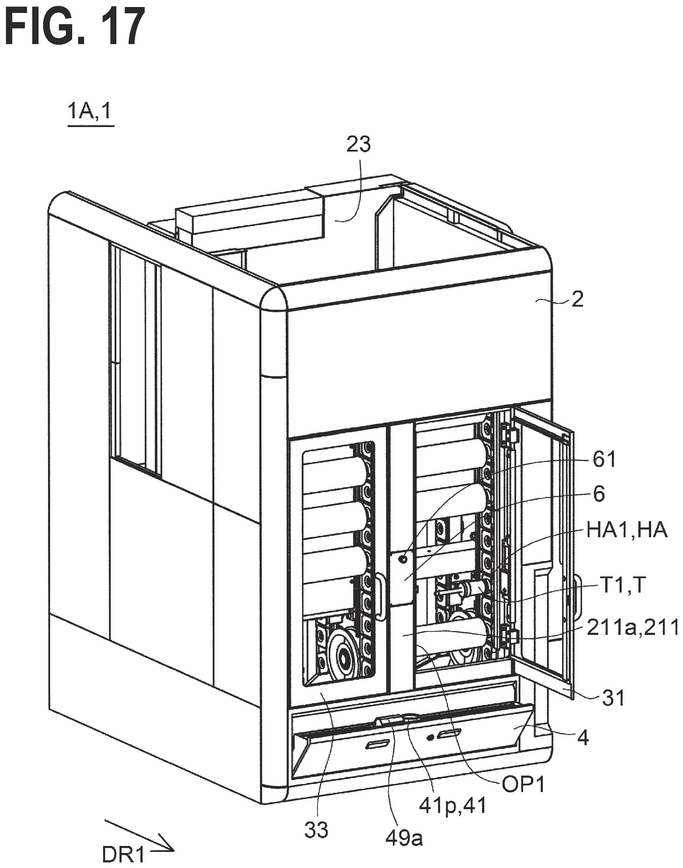

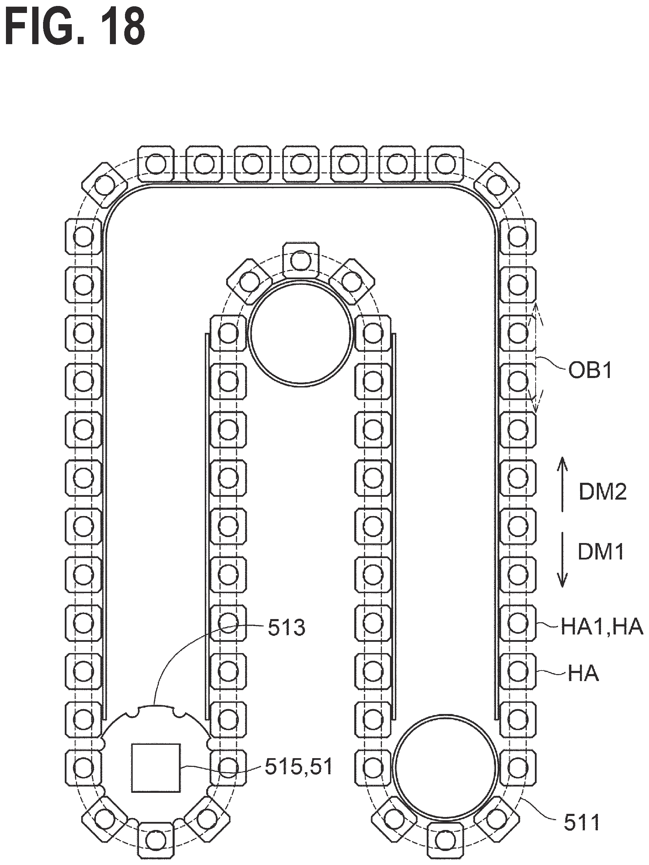

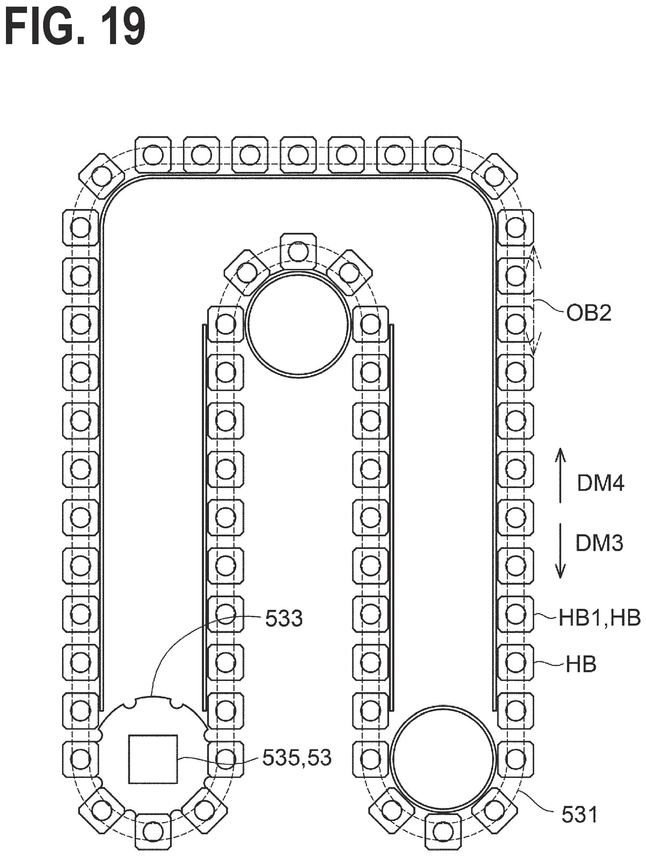

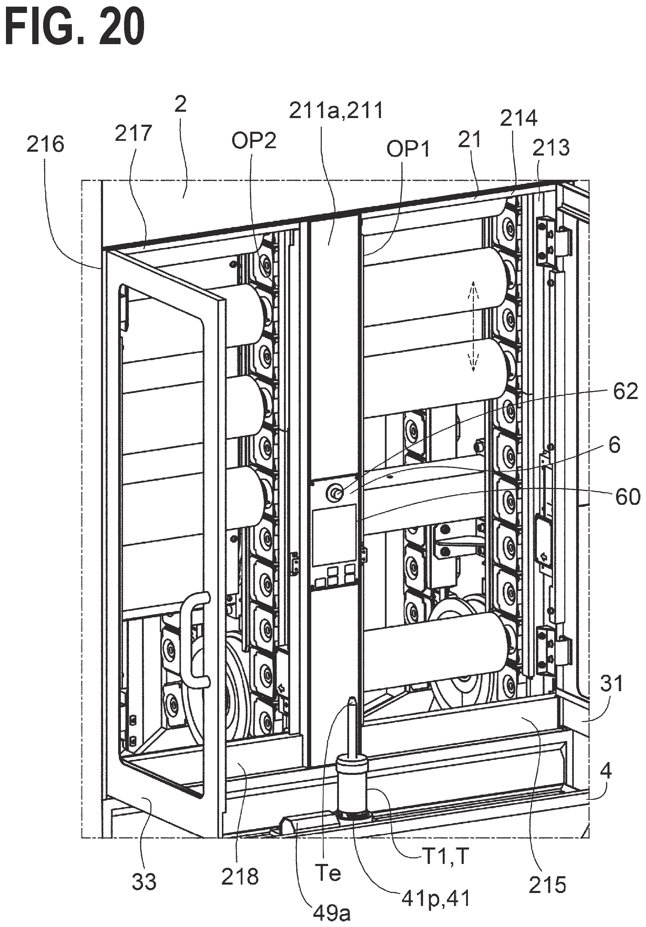

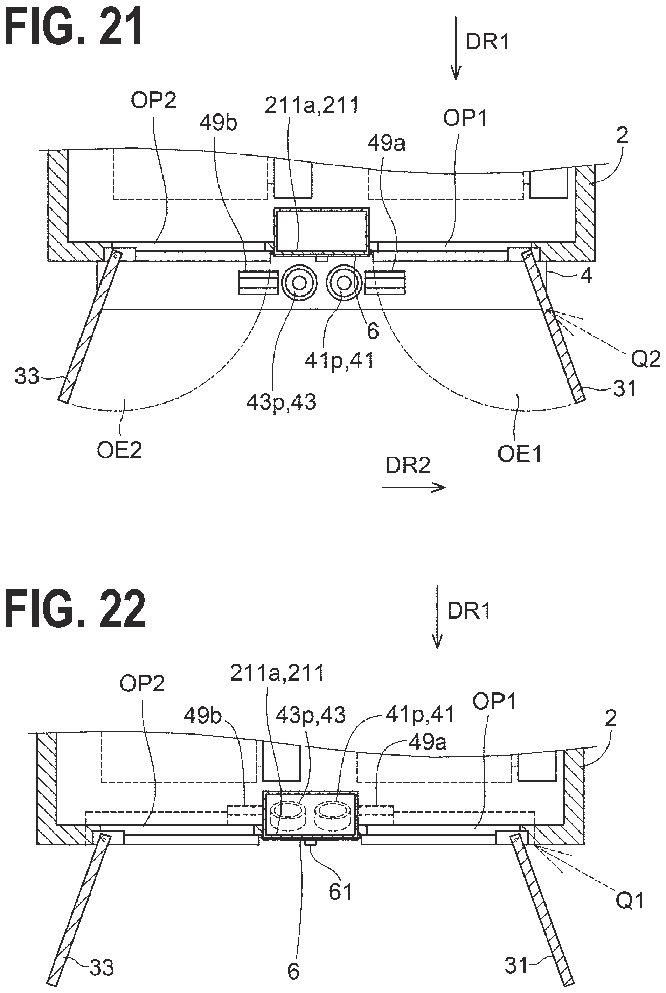

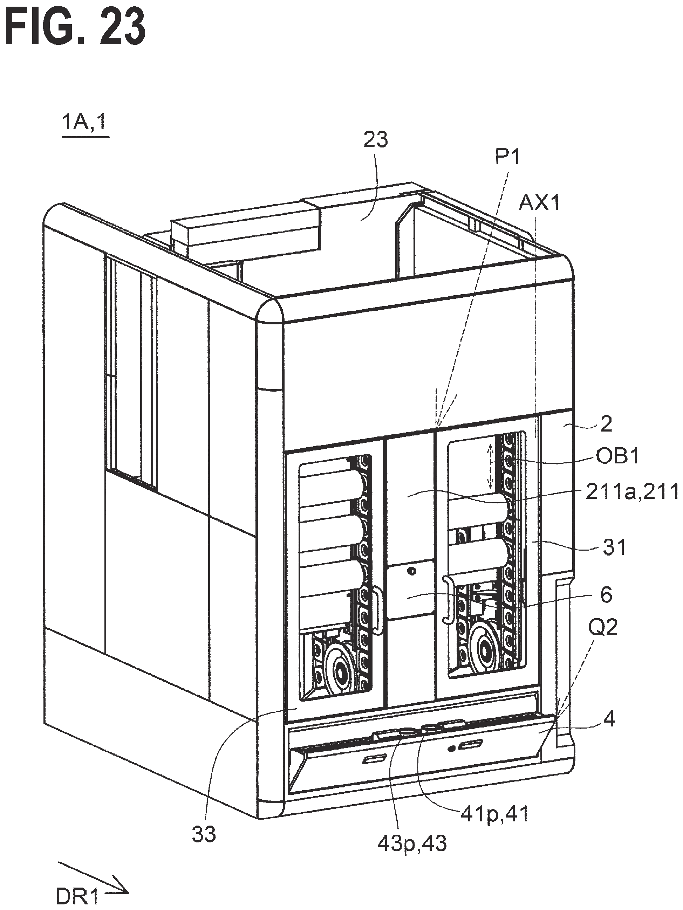

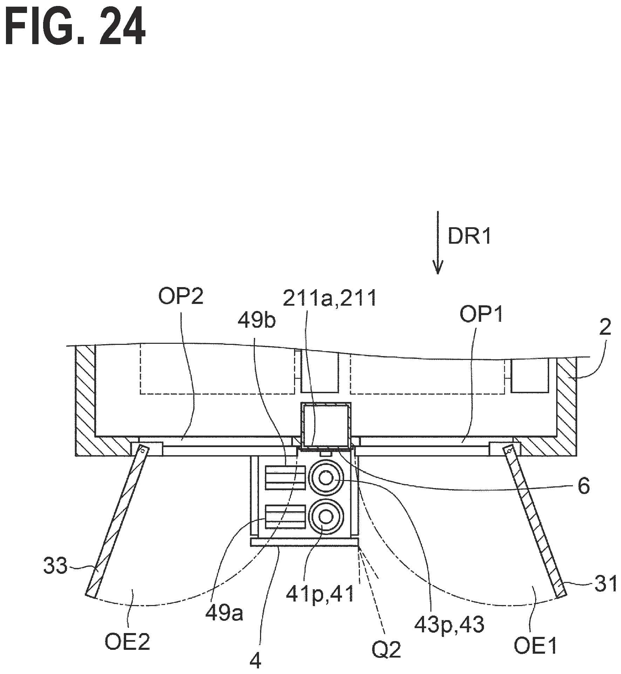

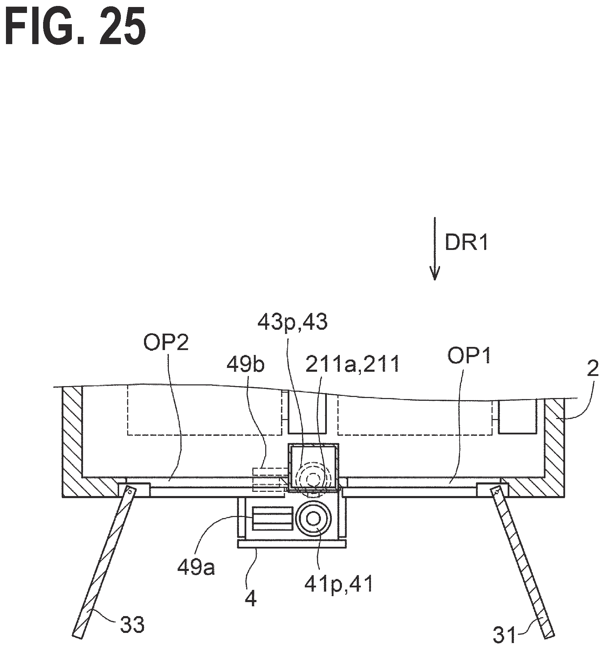

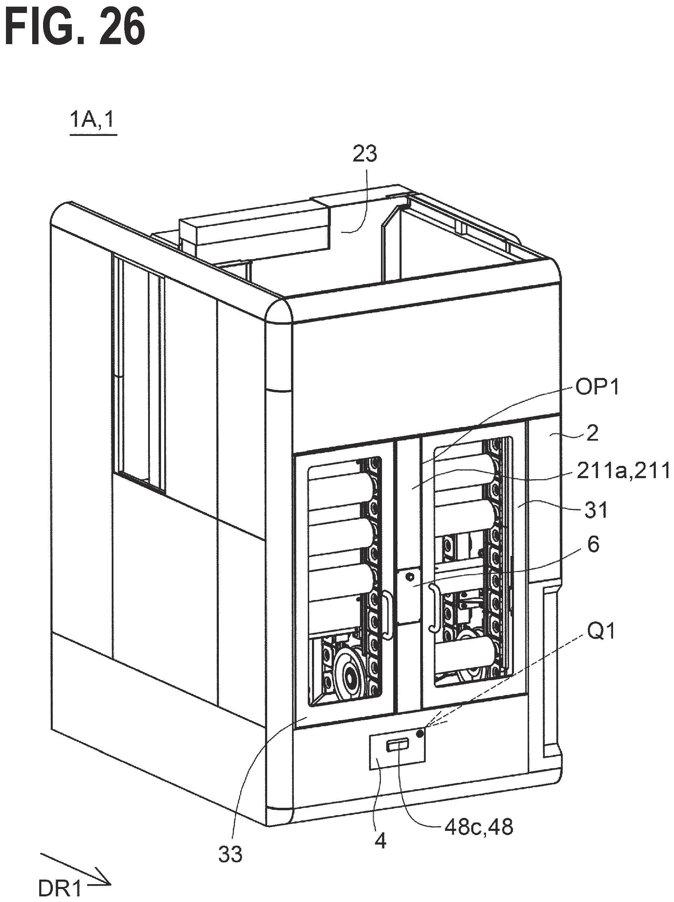

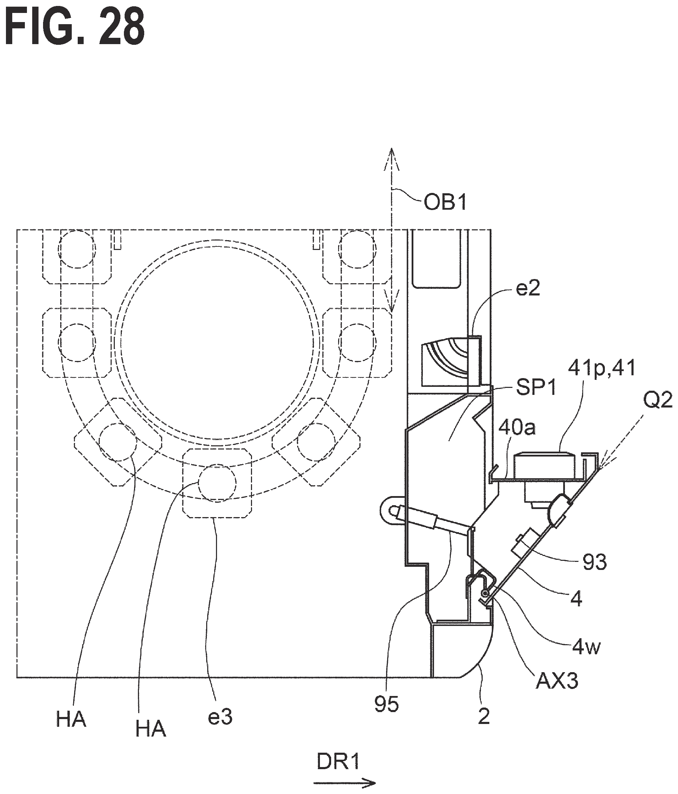

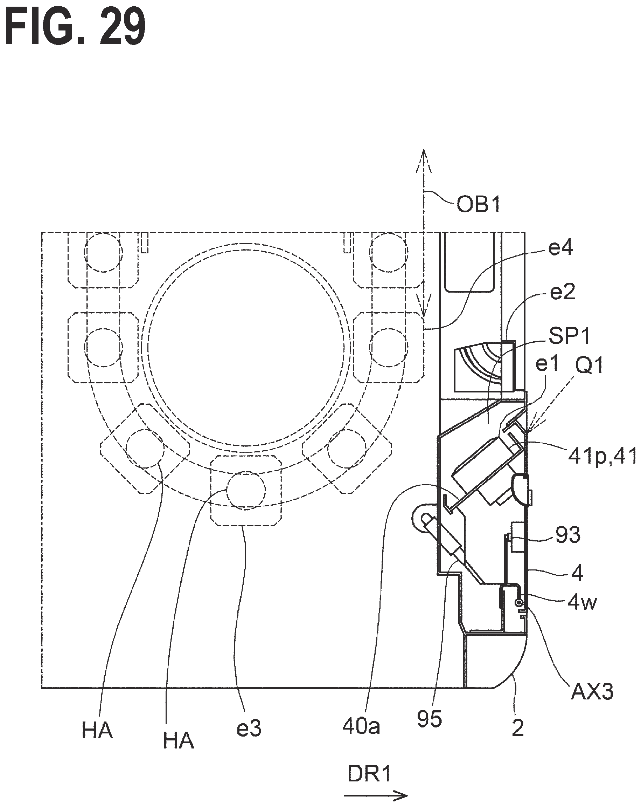

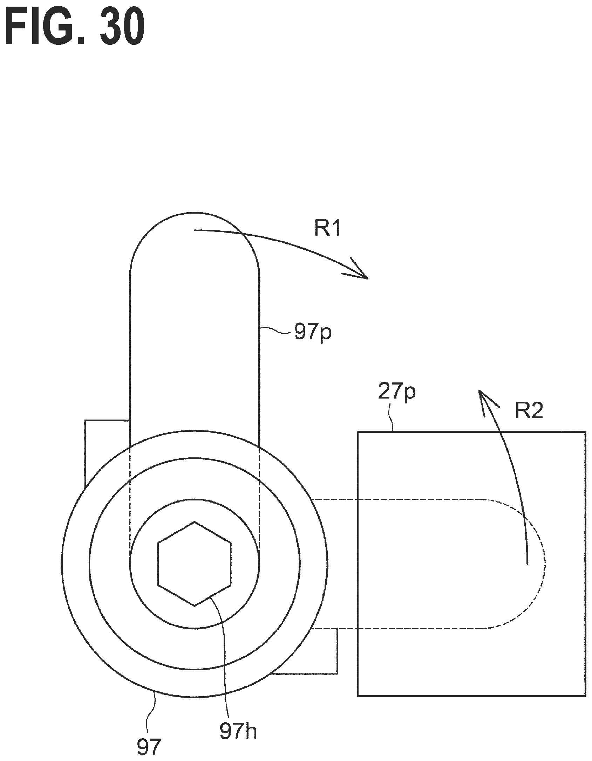

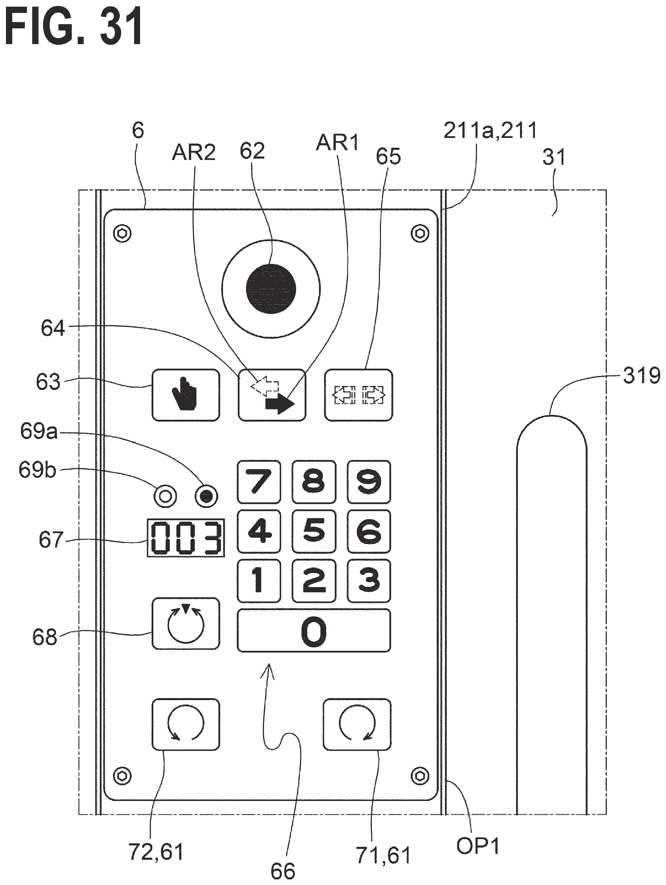

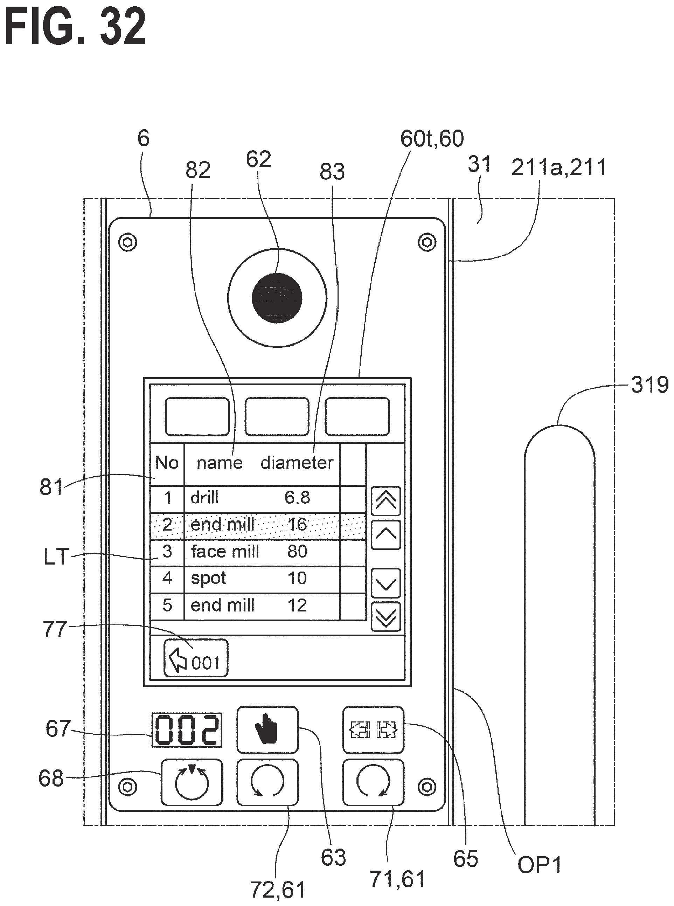

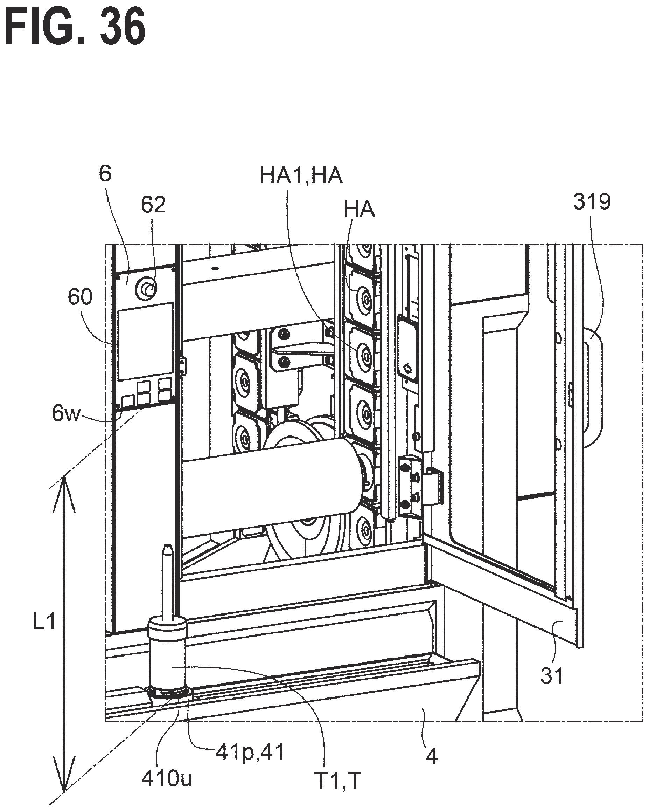

Referring to FIGs.1 to 36, the tool stocker 1A according to the first embodiment will be described. FIGs. 1 and 2 are each a schematic perspective view of the tool stocker 1A according to the first embodiment, schematically illustrating the tool stocker 1A. FIG. 3 is a schematic perspective view of the tool stocker 1A according to the first embodiment, schematically illustrating a part of the tool stocker 1A. FIGs. 4 to 6 are each a schematic perspective view of the tool stocker 1A according to the first embodiment, schematically illustrating the tool stocker 1A. FIG. 7 is a schematic cross-sectional view of the tool stocker 1A according to the first embodiment, schematically illustrating a part of the tool stocker 1A. FIG. 8 is a schematic perspective view of the tool stocker 1A according to the first embodiment, schematically illustrating a part of the tool stocker 1A. FIGs. 9 and 10 are each a schematic cross-sectional view of the tool stocker 1A according to the first embodiment, schematically illustrating a part of the tool stocker 1A. FIG.11 is a schematic cross-sectional view of a tool stocker 1A according to a first modification of the first embodiment, schematically illustrating a part of the tool stocker 1A. FIG. 12 is a schematic perspective view of a tool stocker 1A according to a second modification of the first embodiment, schematically illustrating the tool stocker 1A. FIG. 13 is a schematic perspective view of a tool stocker 1A according to a third modification of the first embodiment, schematically illustrating the tool stocker 1A. FIGs. 14 and 15 are each a schematic cross-sectional view of a tool stocker 1A according to a third modification of the first embodiment, schematically illustrating a part of the tool stocker 1A. FIG. 16 is a schematic illustration of a part of the tool stocker 1A according to the first embodiment. FIG. 17 is a schematic perspective view of the tool stocker 1A according to the first embodiment, schematically illustrating the tool stocker 1A. FIG. 18 is a diagram for describing a first mover 51. FIG. 19 is a diagram for describing a second mover 53. FIG. 20 is a schematic perspective view of a tool stocker 1A according to a fourth modification of the first embodiment, schematically illustrating a part of the tool stocker 1A. FIGs. 21 and 22 are each a schematic cross-sectional view of a tool stocker 1A according to a fifth modification of the first embodiment, schematically illustrating a part of the tool stocker 1A. FIG. 23 is a schematic perspective view of the tool stocker 1A according to the fifth modification of the first embodiment, schematically illustrating the tool stocker 1A. FIGs. 24 and 25 are each a schematic cross-sectional view of a tool stocker 1A according to a sixth modification of the first embodiment, schematically illustrating a part of the tool stocker 1A. FIG. 26 is a schematic perspective view of the tool stocker 1A according to the sixth modification of the first embodiment, schematically illustrating the tool stocker 1A. FIG. 28 is a schematic illustration of a state in which a tool temporary placement table 4 is pulled out from a storage space SP1 of a magazine 2. FIG. 29 is a schematic illustration of a state in which the tool temporary placement table 4 is stored in the storage space SP1 of the magazine 2. FIG. 30 is a diagram for describing a lock component. FIG. 31 is a diagram for describing a first example of an operation panel 6. FIGs. 32 to 35 are each a diagram for describing a second example of the operation panel 6. FIG. 36 is a view for describing an arrangement relationship between the operation panel 6 and a first support section 41 in a height direction. It is to be noted that in FIGs. 1 to 36, components unnecessary for the description will be omitted or simplified in order to avoid complication in the drawings. In addition, the description of the tools T is simplified except for a first tool T1.

As illustrated in FIGs. 1 and 2, a tool stocker 1A includes a magazine 2, a first opening portion OP1, a first door 31, and a tool temporary placement table 4.

The magazine 2 stores a plurality of tools T to be respectively held by a plurality of holders HA, which are movable along a first track OB1.

As illustrated in FIG. 1, the first opening portion OP1 is defined in the magazine 2. When the first tool T1 is carried into the magazine 2, the first tool T1 passes through the first opening portion OP1.

As illustrated in FIGs. 1 and 2, the first door 31 opens and closes the first opening portion OP1. More specifically, the first door 31 is movable between a first position P1 (see FIG. 2), where the first opening portion OP1 is closed, and a second position P2 (see FIG. 1), where the first opening portion OP1 is opened.

As illustrated in FIGs. 1 to 3, the tool temporary placement table 4 includes a first support section 41, where it is possible to support the first tool T1. As illustrated in FIG. 1, the tool temporary placement table 4 is disposed to be lower than the first opening portion OP1, and is supported by the magazine 2.

According to the first embodiment, the tool temporary placement table 4 is supported by the magazine 2 in the tool stocker 1A. In this case, it is possible to temporarily place the tool such as the first tool T1 to be closer to the magazine 2 than in a case where the tool temporary placement table is disposed at a position away from the magazine 2. This configuration shortens the moving distance of an operator, and thus improves the work efficiency of the operator.

In addition, according to the first embodiment, the tool temporary placement table 4 is disposed to be lower than the first opening portion OP1, through which the tools are carried in and out. In this case, the operator is able to smoothly perform the operation of removing the tool from the tool temporary placement table 4 and the operation of carrying the removed tool into the magazine 2. The operator is also able to smoothly perform the operation of carrying the tool out of the magazine 2 and the operation of temporarily placing the tool that has been carried out on the tool temporary placement table 4.

### (Optional and Additional Configurations)

Next, optional and additional configurations that can be adopted in the first embodiment will be described with reference to FIGs. 1 to 36.

### (Position Change of Tool temporary Placement Table 4)

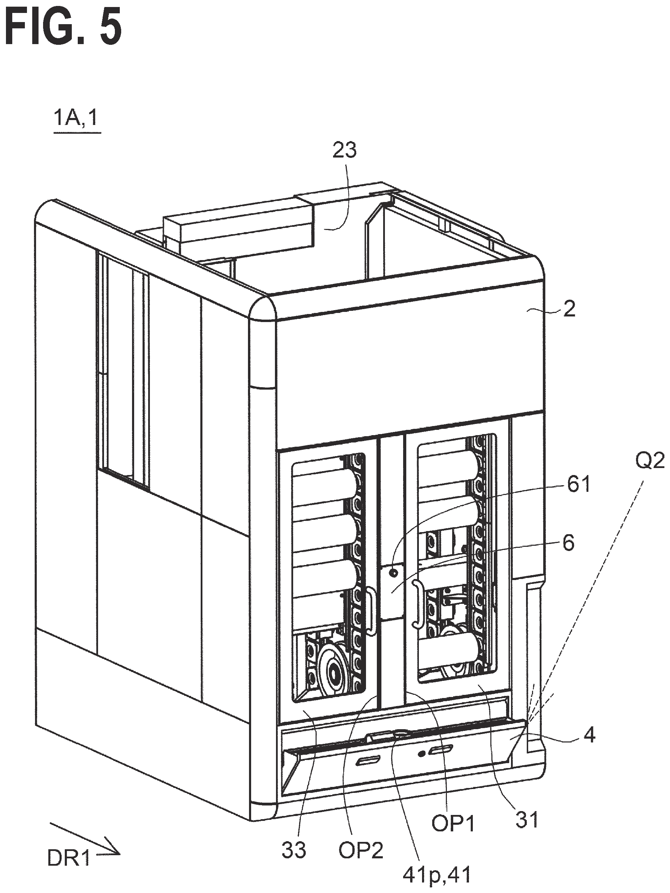

In examples illustrated in FIGs. 4 and 5, the position of the tool temporary placement table 4 is changeable between a backward position Q1 (see FIG. 4), where the first support section 41 is retracted into the magazine 2, and a use position Q2 (see FIG. 5), where the first support section 41 is exposed from the magazine 2.

In a case where the position of the tool temporary placement table 4 is changeable between the above-described backward position Q1 and the above-described use position Q2, the tool temporary placement table 4 does not obstruct the operator when the tool temporary placement table 4 is not used. In addition, the first support section 41 is retracted into the magazine 2, and thus eliminates the need to prepare a retraction space for the first support section 41 separately from the magazine 2.

Alternatively, the tool temporary placement table 4 may be constantly positioned at the use position Q2. In other words, the tool temporary placement table 4 may be unretractable into the magazine 2.

### (Partition 211a)

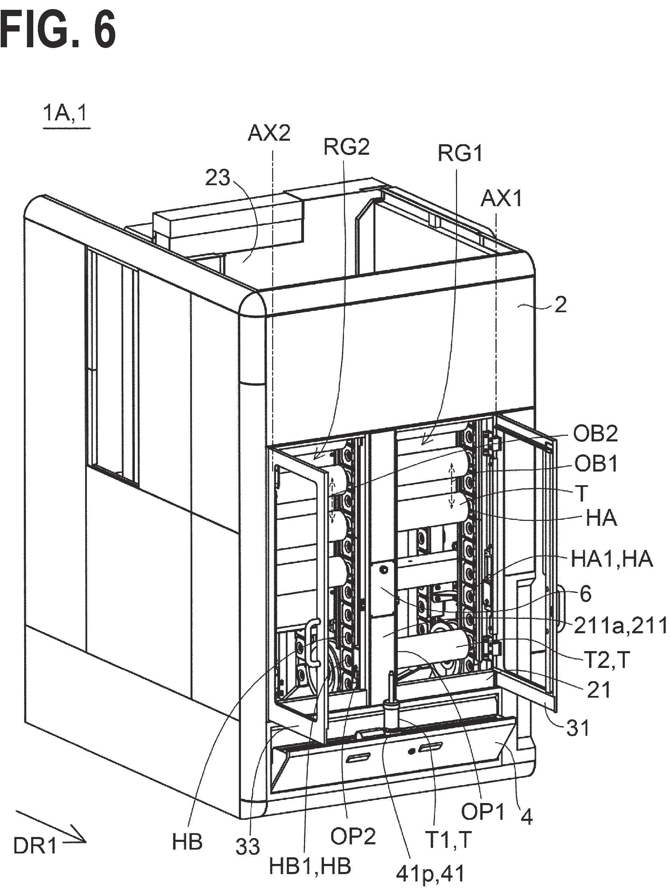

In an example illustrated in FIG. 6, the tool stocker 1A includes: a second opening portion OP2, which is defined in the magazine 2; a second door 33, which is capable of opening and closing the second opening portion OP2; and a partition 211a, which is disposed between the first opening portion OP1 and the second opening portion OP2. In an example illustrated in FIG. 7, the second door 33 is movable between a third position P3, where the second door 33 closes the second opening portion OP2, and a fourth position P4, where the second door 33 opens the second opening portion OP2.

In the example illustrated in FIG. 7, when the tool temporary placement table 4 is positioned at the use position Q2, the first support section 41 is positioned in front of the partition 211a in a plan view.

In this case, as illustrated in FIG. 6, the first support section 41 is disposed at a position close to the first opening portion OP1 and the second opening portion OP2, and thus the tool (for example, the first tool T1) that has been removed from the first support section 41 is easily carried into the magazine 2 through the first opening portion OP1 or the second opening portion OP2. In addition, the first tool T1 supported by the first support section 41 does not block the first opening portion OP1 or the second opening portion OP2, and thus another tool (for example, a second tool T2) is easily carried out of the magazine 2 through the first opening portion OP1 or the second opening portion OP2.

In an example illustrated in FIG. 9, the first door 31 positioned at the second position P2 does not block a region between the first support section 41 and the first opening portion OP1 in the plan view, and thus the tool (for example, the first tool T1) that has been removed from the first support section 41 is easily carried into the magazine 2 through the first opening portion OP1.

In the example illustrated in FIG. 9, the second door 33 positioned at the fourth position P4 does not block a region between the first support section 41 and the second opening portion OP2 in the plan view, and thus the tool (for example, the first tool T1) that has been removed from the first support section 41 is easily carried into the magazine 2 through the second opening portion OP2.

Herein, a first direction DR1 is defined as the direction in which the tool T is carried out of the magazine 2 through the first opening portion OP1 (more specifically, a direction from a rear surface 23 of the magazine 2 toward the first opening portion OP1). In the example illustrated in FIG. 9, when the tool temporary placement table 4 is positioned at the use position Q2, the first support section 41 is positioned at a position that overlaps a straight line LN, which extends from the partition 211a in the first direction DR1 in the plan view. In other words, the first support section 41 is disposed immediately below the space in front of the partition 211a.

In an example illustrated in FIG. 8, the operator is able to perform the operation of removing the first tool T1 from the tool temporary placement table 4 and the operation of carrying the first tool T1 that has been removed into the magazine 2 without moving a step. The operator is also able to perform the operation of carrying the second tool T2 out of the magazine 2 and the operation of temporarily placing the second tool T2 that has been carried out on the tool temporary placement table 4 without moving a step.

### (First Door 31)

In the example illustrated in FIG. 1, the first door 31 is capable of opening and closing the first opening portion OP1, which allows access to a first group of holders HA (for example, a first holder HA1).

In the example illustrated in FIG. 7, an outer side portion 311 of the first door 31 is supported by the magazine 2 so as to be turnable about a first axis AX1, which is substantially parallel to the vertical direction.

As illustrated in FIG. 7, when the tool temporary placement table 4 is positioned at the use position Q2, the first support section 41 is positioned outside a movement track OE1 of the first door 31 in the plan view. In this case, as illustrated in FIG. 8, also when the tool (for example, the first tool T1) is supported by the first support section 41, the first door 31, which moves along the movement track OE1 between the first position P1 and the second position P2 does not interfere with the tool (for example, the first tool T1) supported by the first support section 41. This configuration enables the first door 31 to be opened and closed with the tool (for example, the first tool T1) supported by the first support section 41. It is to be noted that in FIG. 7, the movement track OE1 of the first door 31 is visualized by hatching with dots.

In the example illustrated in FIG. 9, the first door 31 includes: the outer side portion 311, which is supported by the magazine 2; and an inner side portion 313, which is movable toward the partition 211a.

In the example illustrated in FIG. 3, the first door 31 includes a first transparent window 317. When the first door 31 is positioned at the first position P1, the operator is able to visually recognize the plurality of holders HA, which include the first holder HA1, through the first transparent window 317 simultaneously. In this case, the operator is able to check the states of the plurality of holders HA (for example, which holder is empty, or what kind of tool is attached to which holder) without opening the first door 31.

As illustrated in FIG. 3, the first door 31 may include a first handle 319, which can be gripped by the operator.

In the example illustrated in FIG. 7, the first door 31 is a turnable door capable of turning about the first axis AX1. Alternatively, as illustrated in FIG. 11, the first door 31 may be a sliding door to be slidable along a first guide rail GL1.

### (Second Door 33)

In the example illustrated in FIG. 1, the second door 33 is capable of opening and closing the second opening portion OP2, which allows access to a second group of holders HB (for example, a second holder HB1). More specifically, as illustrated in FIG. 7, the second door 33 is movable between the third position P3, where the second opening portion OP2 is closed, and the fourth position P4, where the second opening portion OP2 is opened.

In the example illustrated in FIG. 7, an outer side portion 331 of the second door 33 is supported by the magazine 2 so as to be turnable about a second axis AX2, which is substantially parallel to the vertical direction.

As illustrated in FIG. 7, when the tool temporary placement table 4 is positioned at the use position Q2, the first support section 41 is positioned outside a movement track OE2 of the second door 33 in the plan view. In this case, as illustrated in FIG. 8, also when the tool (for example, the first tool T1) is supported by the first support section 41, the second door 33, which moves along the movement track OE2 between the third position P3 and the fourth position P4 does not interfere with the tool (for example, the first tool T1) supported by the first support section 41. This configuration enables the second door 33 to be opened and closed with the tool (for example, the first tool T1) supported by the first support section 41.

In the example illustrated in FIG. 9, the second door 33 includes: the outer side portion 331, which is supported by the magazine 2; and an inner side portion 333, which is movable toward the partition 211a.

In the example illustrated in FIG. 3, the second door 33 includes a second transparent window 337. When the second door 33 is positioned at the third position P3, the operator is able to visually recognize the plurality of holders HB, which include the second holder HB1, through the second transparent window 337 simultaneously. In this case, the operator is able to check the states of the plurality of holders HB (for example, which holder is empty, or what kind of tool is attached to which holder) without opening the second door 33.

As illustrated in FIG. 3, the second door 33 may include a second handle 339, which can be gripped by the operator.

In the example illustrated in FIG. 7, the second door 33 is a turnable door capable of turning about the second axis AX2. Alternatively, as illustrated in FIG. 11, the second door 33 may be a sliding door to be slidable along a second guide rail GL2.

### (First Region RG1 and Second Region RG2)

In the example illustrated in FIG. 6, a first region RG1 and a second region RG2 are defined in the magazine 2. In the first region RG1, the first group of tools is stored. The first group of tools is held by the first group of holders HA, which is movable along the first track OB1. In the second region RG2, the second group of tools is stored. The second group of tools is held by the second group of holders HB, which is movable along a second track OB2. In the example illustrated in FIG. 6, the second region RG2 is disposed to be aligned with the first region RG1 in the lateral direction.

### (Storage Rack 90)

Alternatively, or additionally, as illustrated in FIG. 12, the first region RG1, in which the first group of tools held by the first group of holders HA, which is movable along the first track OB1, and a storage rack 90 are defined in the magazine 2. In the example illustrated in FIG. 12, the storage rack 90 are disposed to be aligned with the first region RG1 in the lateral direction.

In the example illustrated in FIG. 12, the tool stocker 1A includes: the second opening portion OP2, which is defined in the magazine 2; the second door 33, which is capable of opening and closing the second opening portion OP2; and the partition 211a, which is disposed between the first opening portion OP1 and the second opening portion OP2. Since the second opening portion OP2, the second door 33, and the partition 211a have already been described, repeated description of these configurations will be omitted.

In the example illustrated in FIG. 12, the operator is able to access an article (for example, a tool chip) stored in the storage rack 90 through the second opening portion OP2. As illustrated in FIG. 12, the storage rack 90 may include a plurality of shelves 91, which include a first shelf 91a and a second shelf 91b. When the second door 33 is positioned at the fourth position P4 (in other words, the open position), the operator is able to access a first storage space above the first shelf 91a and a second storage space above the second shelf 91b. On the other hand, when the second door 33 is positioned at the third position P3 (in other words, the closed position), the operator is prohibited from accessing the first storage space above the first shelf 91a and the second storage space above the second shelf 91b.

Alternatively, as illustrated in FIG. 13, the second region RG2 (see FIG. 6) and the storage rack 90 (see FIG. 12) may be omitted.

### (Arrangement of First Support Section 41)

In the examples illustrated in FIGs. 7 and 14, when the tool temporary placement table 4 is positioned at the use position Q2, the first support section 41 is positioned outside the movement track OE1 of the first door 31 in a plan view.

In the examples illustrated in FIGs. 6, 12, and 13, the magazine 2 includes a first wall 211, which defines one side portion of the above-described first opening portion OP1. In the examples illustrated in FIGs. 6 and 12, the first wall 211 serves as the partition 211a, which is disposed between the first opening portion OP1 and the second opening portion OP2.

In examples illustrated in FIGs. 10, 11, and 15, the position of the tool temporary placement table 4 is changeable between the backward position Q1, where the first support section 41 is retracted into the magazine 2, and the use position Q2, where the first support section 41 is exposed from the magazine 2.

In an example illustrated in FIG. 16, the first support section 41 includes a first pocket 41p, which supports the shank of the tool (for example, a shank Ts of the first tool T1) from below. As illustrated in FIG. 16, the tool (for example, the first tool T1) may include a tool body Tm, and a tool holder Th, which holds the tool body Tm.

In the examples illustrated in FIGs. 9 and 14, when the tool temporary placement table 4 is positioned at the use position Q2, the first support section 41 (more specifically, the first pocket 41p) is positioned in front of the first wall 211 (for example, the partition 211a) in a plan view. More specifically, when the tool temporary placement table 4 is positioned at the use position Q2, the first support section 41 (more specifically, the first pocket 41p) is positioned at a position that overlaps the straight line LN, which extends in the first direction DR1.

In this case, as illustrated in FIGs. 6, 12, and 13, the first support section 41 is disposed at a position close to the first opening portion OP1, and thus the tool (for example, the first tool T1) that has been removed from the first support section 41 is easily carried into the magazine 2 through the first opening portion OP1. In addition, the first tool T1 supported by the first support section 41 does not block the first opening portion OP1, and thus another tool (for example, the second tool T2) is easily carried out of the magazine 2 through the first opening portion OP1.

In the examples illustrated in FIGs. 6, 12, and 13, the operator is able to perform the operation of removing the tool from the tool temporary placement table 4 and the operation of carrying the removed tool into the magazine 2 without moving a step. The operator is also able to perform the operation of carrying the tool out of the magazine 2 and the operation of temporarily placing the tool that has been carried out on the tool temporary placement table 4 without moving a step.

In the examples illustrated in FIGs. 6, 12, and 13, when the tool temporary placement table 4 is positioned at the above-described use position Q2, the first support section 41 (more specifically, the first pocket 41p) is disposed in front of the first wall 211 (for example, the above-described partition 211a), which defines one side portion of the first opening portion OP1, and is disposed to be lower than the first wall 211 (for example, the above-described partition 211a).

In the examples illustrated in FIGs 10, 11, and 15, when the tool temporary placement table 4 is positioned at the above-described backward position Q1, the first support section 41 is disposed vertically below the first wall 211 (for example, the above-described partition 211a). In this case, it is possible to retract the first support section 41 by using a space vertically below the first wall 211. In the examples illustrated in FIGs. 10, 11, and 15, the first wall 211 is made up of a hollow support column. Alternatively, the first wall 211 may be made up of a plate-shaped body.

In an example illustrated in FIG. 16, the above-described first track OB1 includes a circular arc track OB1-1. In addition, a storage space SP1 for the tool temporary placement table 4 is defined in the magazine 2. In the example illustrated in FIG. 16, the storage space SP1 is disposed in a region in the vicinity of such a circular arc track OB1-1. The region in the vicinity of the circular arc track OB1-1 tends to be a dead space in designing. In the example illustrated in FIG. 16, the region in the vicinity of the circular arc track OB1-1 is utilized as the storage space SP1 for the tool temporary placement table 4.

### (First Holder HA1)

In the example illustrated in FIG. 3, the magazine 2 includes the first holder HA1, which moves along the first track OB1. More specifically, the magazine 2 includes the first group of holders HA, which is movable along the first track OB1, and the first group of holders HA includes the first holder HA1. A tool is attachable to each in the first group of holders HA. For example, a tool (for example, the first tool T1) is attachable to the first holder HA1 (see FIG. 17). In addition, the first holder HA1 is capable of holding a tool (for example, the first tool T1). Each (for example, the first holder HA1) in the first group of the holders HA may include a gripper capable of gripping the tool, or may include a pod capable of accommodating the shank of the tool.

### (First Mover 51)

The magazine 2 includes a first mover 51, which moves the first group of holders HA (for example, the first holder HA1) along the first track OB1. In an example illustrated in FIG. 18, the first mover 51 includes: a first chain 511, which supports the first group of holders HA (for example, the first holder HA1); and a first motor 515, which drives the first chain 511. The first mover 51 may include a first sprocket 513, which engages with the first chain 511. In this case, the first motor 515 drives the first chain 511 via the first sprocket 513.

The first mover 51 is capable of moving the first group of holders HA (for example, the first holder HA1) in a first movement direction DM1 along the first track OB1, and is capable of moving the first group of holders HA (for example, the first holder HA1) in a second movement direction DM2 along the first track OB1. The second movement direction DM2 is a direction opposite to the first movement direction DM1.

### (Second Holder HB1)

In the example illustrated in FIG. 3, the magazine 2 includes the second holder HB1, which moves along the second track OB2. More specifically, the magazine 2 includes the second group of holders HB, which is movable along the second track OB2, and the second group of holders HB includes the second holder HB1. A tool is attachable to each in the second group of holders HB. For example, a tool (for example, the first tool T1 or another tool) is attachable to the second holder HB1. In addition, the second holder HB1 is capable of holding the tool (for example, the first tool T1 or another tool). The second track OB2 may be substantially parallel to the first track OB1. Each (for example, the second holder HB1) in the second group of holders HB may include a gripper capable of gripping the tool, or may include a pod capable of accommodating the shank of the tool.

### (Second Mover 53)

The magazine 2 includes a second mover 53, which moves the second group of holders HB (for example, the second holder HB1) along the second track OB2. In an example illustrated in FIG. 19, the second mover 51 includes: a second chain 531, which supports the second group of holders HB (for example, the second holder HB1); and a second motor 535, which drives the second chain 531. The second mover 53 may include a second sprocket 533, which engages with the second chain 531. In this case, the second motor 535 drives the second chain 531 via the second sprocket 533.

The second mover 53 is capable of moving the second group of holders HB (for example, the second holder HB1) in a third movement direction DM3, which is along the second track OB2, and is capable of moving the second group of holders HB (for example, the second holder HB1) in a fourth movement direction DM4, which is along the second track OB2. The fourth movement direction DM4 is a direction opposite to the third movement direction DM3.

### (Frame Structural Body 21)

In an example illustrated in FIG. 20, the magazine 2 includes a frame structural body 21, which defines the above-described first opening portion OP1.

The frame structural body 21 includes: the first wall 211 (for example, the partition 211a), which defines one side portion of the first opening portion OP1; a second wall 213, which defines the other side portion of the first opening portion OP1; a first upper frame 214, which defines an upper end portion of the first opening portion OP1; and a first lower frame 215, which defines a lower end portion of the first opening portion OP1. In the example illustrated in FIG. 20, the tool temporary placement table 4 is disposed to be lower than the first lower frame 215.

The frame structural body 21 may define the second opening portion OP2, in addition to the first opening portion OP1. In the example illustrated in FIG. 20, the first wall 211 (more specifically, the partition 211a) defines one side portion of the first opening portion OP1, and also defines one side portion of the second opening portion OP2.

In the example illustrated in FIG. 20, the frame structural body 21 includes: a third wall 216, which defines the other side portion of the second opening portion OP2; a second upper frame 217, which defines an upper end portion of the second opening portion OP2; and a second lower frame 218, which defines a lower end portion of the second opening portion OP2. In the example illustrated in FIG. 20, the tool temporary placement table 4 is disposed to be lower than the second lower frame 218.

### (First Support Section 41)

In the example illustrated in FIG. 20, the first support section 41 (more specifically, the first pocket 41p) is capable of supporting the first tool T1 with a tip end portion Te of the first tool T1 facing upward. In this case, the operator is able to easily check the shape of the tip end portion Te of the first tool T1 supported by the first support section 41 and/or the state of the tip end portion Te.

### (ID Reader 49a)

As illustrated in FIG. 20, the tool stocker 1A may include an ID reader 49a, which is capable of reading tool data including an ID for identifying the first tool T1. In the example illustrated in FIG. 20, the tool temporary placement table 4 includes the ID reader 49a, which is capable of reading the ID for identifying the first tool T1. More specifically, the tool temporary placement table 4 includes the ID reader 49a, which is capable of reading the ID for identifying the first tool T1 arranged in the first support section 41.

In a case where the tool temporary placement table 4 includes the ID reader 49a, it is possible to check and/or register identification information of the first tool T1 supported by the first support section 41. The ID reader 49a may be capable of communicating information with an operation panel 6. For example, in response to the ID reader 49a reading information stored in a memory (examples including an IC chip and an RFID tag) of the first tool T1, the tool data of the first tool T1 may be displayed on a display 60 of the operation panel 6.

### (Second Support Section 43)

As illustrated in FIGs. 21 to 23, the tool temporary placement table 4 may include a second support section 43, which is capable of supporting the second tool T2. In an example illustrated in FIG. 21, the second support section 43 includes a second pocket 43p, which supports the shank of the tool from below.

In an example illustrated in FIG. 23, when the tool temporary placement table 4 is positioned at the use position Q2, the second support section 43 (more specifically, the second pocket 43p) is positioned immediately below the space in front of the first wall 211 (for example, the partition 211a). In other words, when the tool temporary placement table 4 is positioned at the use position Q2, the direction from the first wall 211 (for example, the partition 211a) toward the second support section 43 (more specifically, the second pocket 43p) coincides with the first direction DR1 in a plan view.

In the case where the tool temporary placement table 4 includes the first support section 41 and the second support section 43, it is possible to temporarily place the first tool T1 to be carried into the magazine 2 on the first support section 41, and to temporarily place the second tool T2 that has been carried out of the magazine 2 on the second support section 43.

Herein, a second direction DR2 is defined as a direction from one side portion of the first opening portion OP1 toward the other side portion of the first opening portion OP1. In the example illustrated in FIG. 21, the first support section 41 and the second support section 43 are disposed along the second direction DR2.

Alternatively, as illustrated in FIG. 24, the first support section 41 and the second support section 43 may be disposed along a depth direction of the magazine 2 (more specifically, a direction parallel to the first direction DR1).

As illustrated in FIGs. 21 and 24, the tool temporary placement table 4 may include a second ID reader 49b, which is capable of reading an ID for identifying the second tool T2 placed on the second support section 43.

In the examples illustrated in FIGs. 21 and 24, when the tool temporary placement table 4 is positioned at the use position Q2, both the first support section 41 and the second support section 43 are outside the movement track OE1 in a plan view. Additionally, when the tool temporary placement table 4 is positioned at the use position Q2, both the first support section 41 and the second support section 43 may be outside the movement track OE2 of the second door 33 in the plan view.

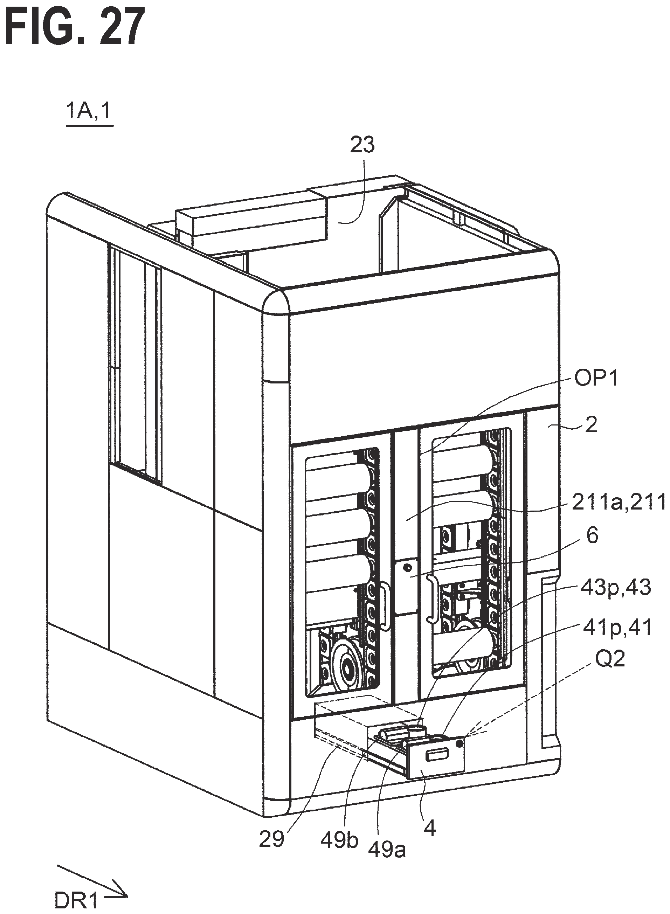

In the examples illustrated in FIGs. 21 and 22 (or FIGs. 26 and 27), the position of the tool temporary placement table 4 is changeable between the backward position Q1, where the first support section 41 and the second support section 43 are retracted into the magazine 2, and the use position Q2, where the first support section 41 and the second support section 43 are exposed from the magazine 2.

In the examples illustrated in FIGs. 21 and 24, when the tool temporary placement table 4 is positioned at the use position Q2, both the first support section 41 and the second support section 43 are positioned in front of the first wall 211 (for example, the partition 211a, which is disposed between the first opening portion OP1 and the second opening portion OP2) in the plan view.

In this case, the first support section 41 and the second support section 43 are disposed at positions close to the first opening portion OP1, and thus the operator is able to efficiently place the tool temporarily on the tool temporary placement table 4, and carry the tool into the magazine 2 (or carry the tool out of the magazine 2 and place the tool on the tool temporary placement table 4). In addition, the first tool T1 supported by the first support section 41 and/or the second tool T2 supported by the second support section 43 do not block the first opening portion OP1.

As illustrated in FIG. 22, when the tool temporary placement table 4 is positioned at the backward position Q1, the first support section 41 and/or the second support section 43 may be disposed vertically below the first wall 211 (for example, the partition 211a, which is disposed between the first opening portion OP1 and the second opening portion OP2).

As illustrated in FIGs. 24 to 26, the tool temporary placement table 4 may be pulled out from the magazine 2 in a multi-stepwise manner. In an example illustrated in FIG. 25, when the tool temporary placement table 4 is pulled out from the magazine 2 by one step, only one of the first support section 41 and the second support section 43 is exposed from the magazine 2. In an example illustrated in FIG. 24, when the tool temporary placement table 4 is pulled out from the magazine 2 by two steps, both the first support section 41 and the second support section 43 are exposed from the magazine 2.

### (Handle 48)

In the example illustrated in FIG. 3, the tool temporary placement table 4 includes handles 48. In the example illustrated in FIG. 3, the handle 48 denotes a recessed handle 48c. In other words, the tool temporary placement table 4 includes the recessed handles 48c. In the example illustrated in FIG. 3, the handle 48 (more specifically, the recessed handle 48c) is pulled out in the first direction DR1, and thus the position of the tool temporary placement table 4 is changed from the backward position Q1 to the use position Q2.

### (First Example of Method for Pulling Out Tool Temporary Placement Table 4)

In examples illustrated in FIGs. 28 and 29, the tool temporary placement table 4 is supported by the magazine 2 so as to be tiltable about an axis (hereinafter, referred to as a "third axis AX3") that is substantially parallel to a horizontal plane. In this case, the tool temporary placement table 4 can be pulled out in a tilting method from the backward position Q1 to the use position Q2.

In a case where the tilting method is adopted, the storage space SP1 of the tool temporary placement table 4 in the depth direction (more specifically, the storage space SP1 of the tool temporary placement table 4 in a direction parallel to the first direction DR1) can be made compact.

In the examples illustrated in FIGs. 28 and 29, the tilt angle of the tool temporary placement table 4 about the third axis AX3 when tilting from the backward position Q1 to the use position Q2 is smaller than 90 degrees. The tilt angle of the tool temporary placement table 4 about the third axis AX3 when tilting from the backward position Q1 to the use position Q2 may be equal to or smaller than 70 degrees, equal to or smaller than 60 degrees, or equal to or smaller than 50 degrees.

In the examples illustrated in FIGs. 28 and 29, the magazine 2 supports a lower end portion 4w of the tool temporary placement table 4 so as to be tiltable about the third axis AX3.

In the example illustrated in FIG. 28, when the tool temporary placement table 4 is positioned at the use position Q2, an upper surface 40a of the tool temporary placement table 4 is substantially parallel to the horizontal plane. In the example illustrated in FIG. 29, when the tool temporary placement table 4 is positioned at the backward position Q1, the upper surface 40a of the tool temporary placement table 4 is inclined with respect to each the horizontal plane and the vertical plane.

In the example illustrated in FIG. 29, when the tool temporary placement table 4 is positioned at the backward position Q1, an upper end e1 of the first support section 41 is lower in height than a lower end e2 of the first opening portion OP1. In the example illustrated in FIG. 29, when the tool temporary placement table 4 is positioned at the backward position Q1, the upper end e1 of the first support section 41 is higher in height than a lower end e3 of the first track OB1. Alternatively, when the tool temporary placement table 4 is positioned at the backward position Q1, the upper end e1 of the first support section 41 may be lower in height than the lower end e3 of the first track OB1.

In the example illustrated in FIG. 28, the storage space SP1 for the tool temporary placement table 4 is defined in the magazine 2. In addition, in the example illustrated in FIG. 28, at least a part of the storage space SP1 is defined in a region higher than the lower end e3 of the first track OB1 and lower than the lower end e2 of the first opening portion OP1.

In the example illustrated in FIG. 29, when the tool temporary placement table 4 is positioned at the backward position Q1, the entirety of the first support section 41 (more specifically, the entirety of the first pocket 41p) is positioned further in the first direction DR1 than an end e4 of the first track OB1 in the first direction DR1. When the tool temporary placement table 4 is positioned at the backward position Q1, the entirety of the tool temporary placement table 4 may be positioned further in the first direction DR1 than the end e4 of the first track OB1 in the first direction DR1.

The tool stocker 1A may include a magnet 93, which maintains the tool temporary placement table 4 at the backward position Q1. The magnet 93 is disposed on one of the tool temporary placement table 4 and the magazine 2, and attracts a magnetic body of the other one of the tool temporary placement table 4 and the magazine 2 with magnetic force.

As illustrated in FIGs. 28 and 29, the tool stocker 1A may include a damper 95, which prevents an increase in the moving speed when the tool temporary placement table 4 moves from the backward position Q1 to the use position Q2.

### (Second Example of Method for Pulling Out Tool Temporary Placement Table 4)

In the examples illustrated in FIGs. 24 to 27, the tool temporary placement table 4 is supported by the magazine 2 so as to be slidable in a direction substantially parallel to a horizontal plane. In this case, it is possible to pull out the tool temporary placement table 4 in a sliding method from the backward position Q1 to the use position Q2.

As illustrated in FIG. 27, the magazine 2 may include a guide rail(s) 29, which supports the tool temporary placement table 4 to be slidable.

In the examples illustrated in FIGs. 26 and 27, the upper end of the first support section 41 (more specifically, the height of the upper end of the first pocket 41p) is lower in height than the lower end of the first opening portion OP1. The upper end of the first support section 41 (more specifically, the height of the upper end of the first pocket 41p) may be higher in height than the lower end e3 of the first track OB1, or may be lower in height than the lower end e3 of the first track OB1.

### (Third Example of Method for Pulling Out Tool Temporary Placement Table 4)

The tool temporary placement table 4 may be supported by the magazine 2 so as to be turnable about a vertical axis. In other words, it may be possible to pull out the tool temporary placement table 4 from the backward position Q1 to the use position Q2 in a turning method of turning about the vertical axis.

### (Lock Component 97)

As illustrated in FIGs. 3 and 30, the tool stocker 1A may include a lock component 97, which prohibits a position change of the tool temporary placement table 4 from the backward position Q1 to the use position Q2. In the lock component 97, a hexagonal hole portion 97h to be operated by a tool such as a hexagonal wrench may be provided. In an example illustrated in FIG. 30, when the hexagonal hole portion 97h is operated in a first rotation direction R1, a locking piece 97p of the lock component 97 moves from an unlocked position to a locked position. As a result, the locking piece 97p is engaged with a locked portion 27p of the magazine 2, and the position change of the tool temporary placement table 4 from the backward position Q1 to the use position Q2 is prohibited. On the other hand, when the hexagonal hole portion 97h is operated in a second rotation direction R2, the locking piece 97p of the lock component 97 moves from the locked position to the unlocked position. As a result, the engagement between the locking piece 97p and the locked portion 27p of the magazine 2 is released, and the position change of the tool temporary placement table 4 from the backward position Q1 to the use position Q2 is allowed.

In a case where the tool stocker 1A includes the lock component 97, it is possible to prohibit use of the tool temporary placement table 4.

### (Operation Panel 6)

The tool stocker 1A may include the operation panel 6 for operating the magazine 2.

In the example illustrated in FIG. 8, the tool stocker 1A (more specifically, the operation panel 6) includes a first switch 61, which is for operating the movement of the first group of holders HA (for example, the first holders HA1) in the direction along the first track OB1.

In the example illustrated in FIG. 8, the operation panel 6 (for example, the above-described first switch 61) is disposed on the first wall 211 (for example, the partition 211a, which is disposed between the first opening portion OP1 and the second opening portion OP2), which defines one side portion of the above-described first opening portion OP1. In the example illustrated in FIGs. 9 and 14, the first opening portion OP1 includes: one side portion relatively far from the first axis AX1 and the other side portion relatively close to the first axis AX1. In the example illustrated in FIGs. 9 and 14, the first wall 211 is a wall that defines one side portion relatively far from the first axis AX1 out of two side portions of the first opening portion OP1.

In a case where the operation panel 6 is disposed on the first wall 211 (for example, the partition 211a), the operator is able to sequentially and smoothly (1) place the tool temporarily on the first support section 41, which is disposed in front of the first wall 211 in a plan view, and (2) operate the operation panel 6.

As illustrated in FIGs. 9 and 14, when the tool temporary placement table 4 is positioned at the use position Q2, the first support section 41 (more specifically, the first pocket 41p) may be positioned at a position that overlaps the straight line LN, which extends from the operation panel 6 in the first direction DR1 in a plan view. In other words, the first support section 41 (more specifically, the first pocket 41p) may be disposed immediately below the space in front of the operation panel 6.

In the example illustrated in FIG. 5, while the first opening portion OP1 is closed by the first door 31, the operation panel 6 (for example, the above-described first switch 61) is preferably operable. In the example illustrated in FIG. 5, the operation panel 6 (for example, the above-described first switch 61) is operable while the first opening portion OP1 is closed by the first door 31 and the second opening portion OP2 is closed by the second door 33.

As illustrated in FIG. 31, the operation panel 6 may include an emergency stop button 62. While the first group of holders HA is moving along the first track OB1, when the emergency stop button 62 is operated, the movement of the first group of holders HA is stopped. While the second group of holders HB is moving along the second track OB2, when the emergency stop button 62 is operated, the movement of the second group of holders HB is stopped.

As illustrated in FIG. 31, the operation panel 6 may include a manual operation selection switch 63. In an example illustrated in FIG. 31, in response to pressing of the manual operation selection switch 63, and the manual operation of the magazine 2 is enabled. When the manual operation selection switch 63 is pressed once, the manual operation of the magazine 2 may be enabled, and when the manual operation selection switch 63 is pressed twice, the manual operation of the magazine 2 may be disabled. In response to enabling of the manual operation of the magazine 2, the manual operation selection switch 63 may be turned on, and in response to disabling of the manual operation of the magazine 2, the manual operation selection switch 63 may be turned off.

In a case where the magazine 2 includes the first group of holders HA, which moves along the first track OB1, and the second group of holders HB, which moves along the second track OB2 different from the first track OB1, the operation panel 6 may include a changeover switch 64, which switches an operation target between the first group of holders HA and the second group of holders HB. In the example illustrated in FIG. 31, in response to selection of the first group of holders HA as the operation target, based on the operation of the changeover switch 64, an arrow AR1, which indicates the direction of the first group of holders HA, may be turned on. In response to selection of the second group of holders HB as the operation target, based on the operation of the changeover switch 64, an arrow AR2, which indicates the direction of the second group of holders HB, may be turned on.

The operation panel 6 may include an unlock switch 65 of the first door 31. In the example illustrated in FIG. 31, the first door 31 is unlocked in response to pressing of the unlock switch 65. The unlock switch 65 may be turned on in response to the first door 31 entering an unlocked state. The unlock switch 65 may be turned off in response to the first door 31 entering a locked state. Both the first door 31 and the second door 33 may be unlocked in response to pressing of the unlock switch 65.

The operation panel 6 may include a tool number input key 66 (for example, a numeric keypad), and a tool number display 67. A tool number that has been input is displayed in the tool number display 67 in response to inputting of the tool number using the tool number input key 66.

The operation panel 6 may include a designated tool indexing key 68. Herein, a holder for holding a tool corresponding to a tool number designated by the operator is defined as a designated holder. In the example illustrated in FIG. 31, the operator is able to designate a tool number using the tool number input key 66. In the example illustrated in FIG. 31, while the tool number is designated, in response to pressing of the designated tool indexing key 68, the designated holder moves to a predetermined indexing position D. For example, in a case where the designated holder is included in the first group of holders HA, the first mover 51 moves the first group of holders HA along the first track OB1 so that the designated holder moves to a first indexing position D1 (see FIG. 8) in response to pressing of the designated tool indexing key 68. On the other hand, in a case where the designated holder is included in the second group of holders HB, the second mover 53 moves the second group of holders HB along the second track OB2 so that the designated holder moves to a second indexing position D2 (see FIG. 8) in response to pressing of the designated tool indexing key 68.

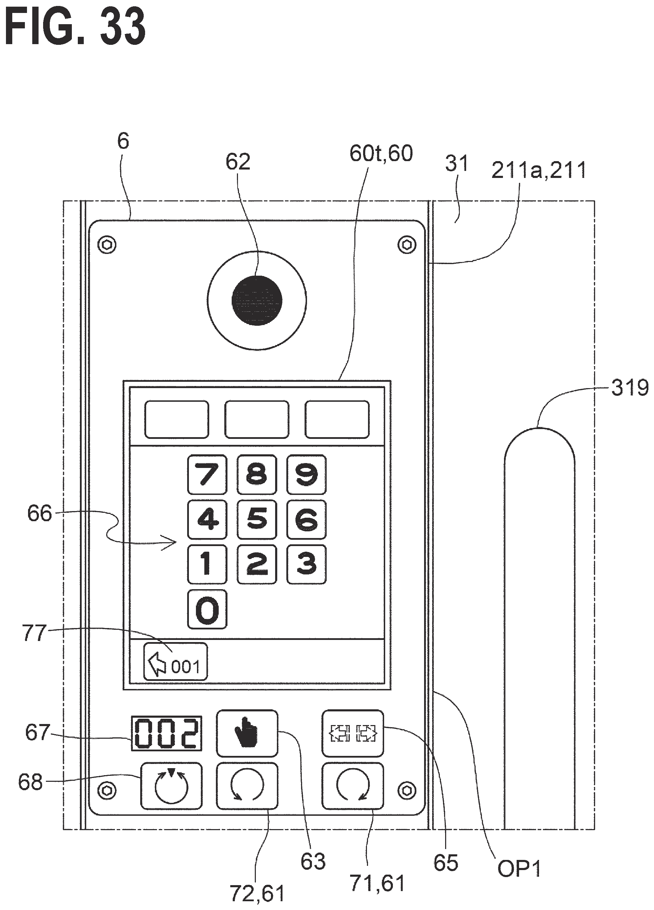

The tool number display 67 may be configured to display the number of the tool held by the holder positioned at a predetermined indexing position D. In other words, the tool number display 67 may be configured to selectively display the tool number that has been input using the tool number input key 66 and the number of the tool held by the holder positioned at the predetermined indexing position D. In the example illustrated in FIG. 31, when the tool number that has been input using the tool number input key 66 is displayed on the tool number display 67, a first display lamp 69a is turned on. On the other hand, when the number of the tool held by the holder positioned at the predetermined indexing position D is displayed on the tool number display 67, a second display lamp 69b is turned on. Alternatively, as illustrated in FIG. 33, a display 77 for displaying the number of the tool held by the holder positioned at the predetermined indexing position D may be provided separately from the tool number display 67 for displaying the tool number that has been designated using the tool number input key 66.

As illustrated in FIG. 31, the operation panel 6 may include a forward rotation key 71. For example, in response to pressing of the forward rotation key 71, the first mover 51 moves the first group of holders HA in the first movement direction DM1, which is along the first track OB1 (see FIG. 18). More specifically, while the first group of holders HA is selected as the operation target in accordance with the operation of the changeover switch 64, in response to pressing of the forward rotation key 71, the first mover 51 moves the first group of holders HA in the first movement direction DM1 (see FIG. 18), which is along the first track OB1. While the second group of holders HB is selected as the operation target in accordance with the operation of the changeover switch 64, in response to pressing of the forward rotation key 71, the second mover 53 may move the second group of holders HB in a third movement direction DM3 (see FIG. 19), which is along the second track OB2.

The operation panel 6 may include a reverse rotation key 72. For example, in response to pressing of the reverse rotation + 72, the first mover 51 moves the first group of holders HA in the second movement direction DM2 (see FIG. 18), which is along the first track OB1. More specifically, while the first group of holders HA is selected as the operation target in accordance with the operation of the changeover switch 64, in response to pressing of the reverse rotation key 72, the first mover 51 moves the first group of holders HA in the second movement direction DM2 (see FIG. 18), which is along the first track OB1. While the second group of holders HB is selected as the operation target in accordance with the operation of the changeover switch 64, in response to pressing of the reverse rotation key 72, the second mover 53 may move the second group of holders HB in a fourth movement direction DM4 (see FIG. 19), which is along the second track OB2.

In a case where the operation panel 6 includes the forward rotation key 71 and/or the reverse rotation key 72, the operator is able to continuously check a plurality of tools held by the first group of holders HA (or the plurality of tools held by the second group of holders HB) through the first transparent window 317 of the first door 31 (or the second transparent window 337 of the second door 33).

It is to be noted that when the first door 31 is positioned at the open position, an operation accompanied by the movement of the first group of holders HA is disabled among the operations of the plurality of switches included in the operation panel 6. When the second door 33 is positioned at the open position, the operation accompanied by the movement of the second group of holders HB is disabled among the operations of the plurality of switches included in the operation panel 6.

As illustrated in FIG. 32, the operation panel 6 may include the display 60, which displays tool data. The display 60 may be a display 60t, which is equipped with a touch panel.

In an example illustrated in FIG. 32, a list LT of a plurality of tools that are stocked in the magazine 2 is displayed on the display 60 of the operation panel 6. In the example illustrated in FIG. 32, the list LT includes a tool number 81, a tool name 82, and a tool size 83 (for example, a tool diameter) of each in the plurality of tools.

In the example illustrated in FIG. 32, the operator selects a desired tool from the list LT, and is able to designate the tool number. In the example illustrated in FIG. 32, the tool having the tool number "2" is selected from the list LT, and thus the tool having the tool number "2" is designated. The tool number of the designated tool may be displayed on a tool number display 67.

Alternatively, as illustrated in FIG. 33, the operator may directly input the tool number of a desired tool to designate the tool number. In examples illustrated in FIGs. 32 and 33, while the tool number is designated, the designated holder moves to a predetermined indexing position D in response to pressing of the designated tool indexing key 68 (see FIG. 8).

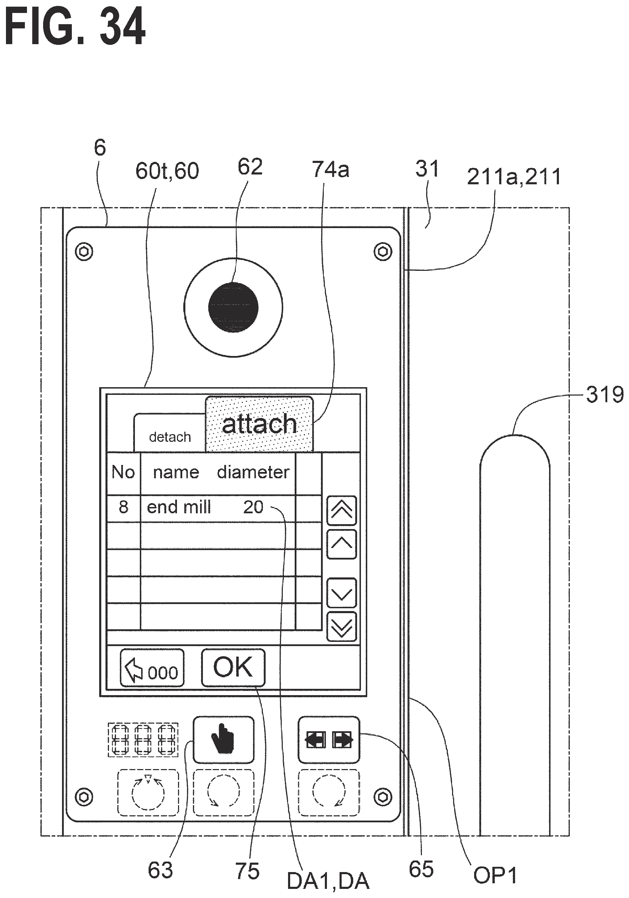

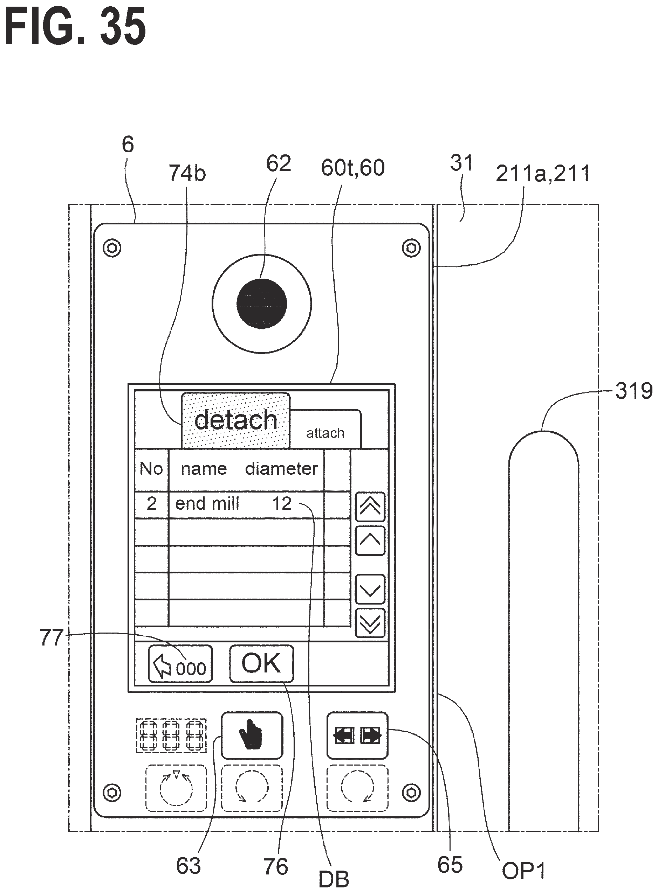

In examples illustrated in FIGs. 34 and 35, it is possible to display tool data DA that has been read by the ID reader 49a of the tool temporary placement table 4 on the display 60. For example, in response to the ID reader 49a of the tool temporary placement table 4 reading the information stored in the memory of the first tool T1 supported by the first support section 41, tool data DA1 of the first tool T1 is displayed on the display 60.

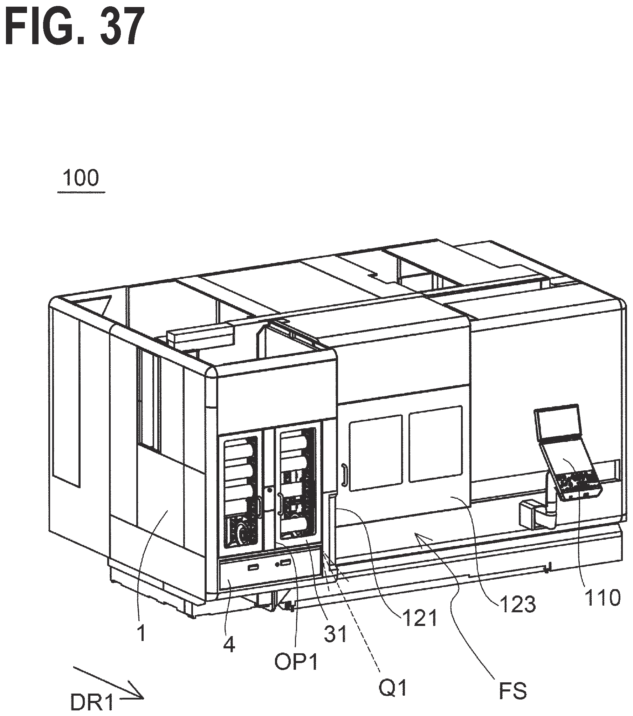

In the example illustrated in FIG. 34, in response to pressing of a first button 75 on the operation panel 6 (for example, the first button 75 on the display 60t, which is equipped with a touch panel), the tool data DA that has been read by the ID reader 49a is transmitted to a controller 110 (see FIG. 37) of the machine tool, as data indicating the tool to be carried into the magazine 2. More specifically, while a tool attachment tab 74a is selected, in response to pressing of the first button 75 on the operation panel 6, the tool data DA that has been read by the ID reader 49a is transmitted to the controller 110 of the machine tool, as the tool data indicating the tool to be carried into the magazine 2.

In the example illustrated in FIG. 35, in response to pressing of a second button 76 on the operation panel 6 (for example, the second button 76 on the display 60t, which is equipped with a touch panel), the tool data DB that has been read by the ID reader 49a is transmitted to the controller 110 (see FIG. 37) of the machine tool, as the data indicating the tool that has been carried out of the magazine 2. More specifically, while a tool detachment tab 74b is selected, in response to pressing of the second button 76 on the operation panel 6, the tool data DB that has been read by the ID reader 49a is transmitted to the controller 110 of the machine tool, as the tool data indicating the tool that has been carried out of the magazine 2.

When the tool temporary placement table 4 is positioned at the use position Q2, a distance L1 (see FIG. 36) along the vertical direction between an upper end 410u of the first support section 41 (more specifically, the first pocket 41p) and a lower end 6w of the operation panel 6 is, for example, equal to or longer than 20 centimeters, equal to or longer than 30 centimeters, or equal to or longer than 35 centimeters. In a case where the distance L1 is sufficiently longe, when a long tool is supported by the first support section 41, the operation of the operation panel 6 is not hindered by such a long tool.

### (Cable CB)

The tool stocker 1A may include a cable CB, which communicably connects the operation panel 6 with another piece of equipment (examples including the first motor 515, the second motor 535, and the controller 110). In the example illustrated in FIG. 16, a part of the cable CB is disposed inside the above-described first wall 211 (for example, the partition 211a, which is disposed between the first opening portion OP1 and the second opening portion OP2).

### (Second Embodiment)

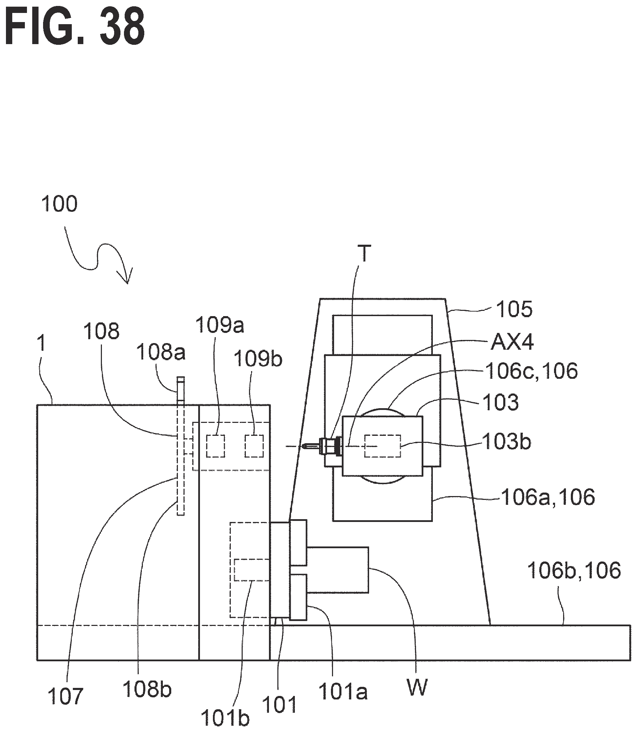

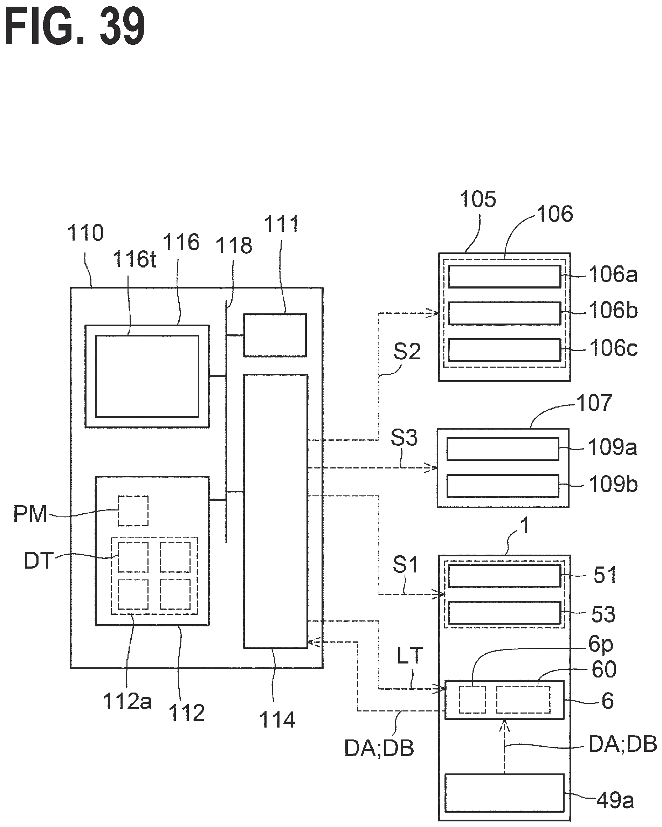

A machine tool 100 according to the second embodiment will be described with reference to FIGs. 1 to 39. FIG. 37 is a schematic perspective view of a machine tool 100 according to a second embodiment, schematically illustrating the machine tool 100. FIG. 38 is a schematic illustration of a part of the machine tool 100 according to the second embodiment. FIG. 39 is a schematic illustration of a state in which a controller 110 is capable of controlling a plurality of to-be-controlled devices.

In the second embodiment, differences from the first embodiment will be mainly described. On the other hand, in the second embodiment, repeated description of the matters that have been described in the first embodiment will be omitted. Therefore, even if not explicitly described in the second embodiment, it is needless to say that the matters that have been described in the first embodiment is applicable to the second embodiment. On the contrary, all matters to be described in the second embodiment are applicable to the first embodiment.

As illustrated in FIG. 38, the machine tool 100 according to the second embodiment includes a workpiece holder 101, a machining head 103, a mover 105, and a tool stocker 1. The machine tool 100 may include an automatic tool changer 107.

The workpiece holder 101 supports a workpiece W. The machining head 103 is capable of holding the tool T for machining the workpiece W. The machining head 103 is capable of holding a first tool T1, and is capable of holding a second tool T2, which is different from the first tool T1.

The mover 105 moves the machining head 103 relative to the workpiece holder 101.

The tool stocker 1 may be the tool stocker 1A according to the first embodiment, or may be any other tool stocker.

As illustrated in FIG. 1, the tool stocker 1 includes: (1) a magazine 2, which stores a plurality of tools respectively held by a plurality of holders HA, which are movable along a first track OB1; (2) a first opening portion OP1, which is defined in the magazine 2, and through which the first tool T1 passes when the first tool T1 is carried into the magazine 2; (3) a first door 31, which is capable of opening and closing the first opening portion OP1; and (4) a tool temporary placement table 4, which includes a first support section 41, which is capable of supporting the first tool T1. In addition, the tool temporary placement table 4 is disposed to be lower than the first opening portion OP1, and is supported by the magazine 2.

The machine tool 100 according to the second embodiment has the same effects as those of the tool stocker 1A according to the first embodiment.

### (Optional and Additional Configurations)

Subsequently, optional and additional configurations that can be adopted in the machine tool 100 according to the second embodiment will be described with reference to FIGs. 1 to 39.

### (Machine Tool 100)

In an example illustrated in FIG. 38, the machine tool 100 according to the second embodiment is a multitasking machine capable of performing a plurality of types of machining including turning and milling. The machine tool 100 according to the second embodiment may be a machining center (for example, a vertical machining center or a horizontal machining center), or may be a lathe.

In an example illustrated in FIG. 37, the machine tool 100 includes: an opening portion 121, through which the workpiece can be carried into a machining area; and a door 123, which is capable of opening and closing such an opening portion 121. Herein, a front surface FS (that is, a front surface of the machine tool) is defined as one end where the opening portion 121 is present, and a rear surface (that is, a rear surface of the machine tool) is defined as an opposite end of the above one end where the opening portion 121 is present. In the example illustrated in FIG. 37, the first opening portion OP1 of the tool stocker 1 is provided on the front surface FS. In other words, in the example illustrated in FIG. 37, the first opening portion OP1 of the tool stocker 1 is disposed at the same end as the opening portion 121, through which the workpiece can be carried into the machining area. More specifically, the first opening portion OP1 of the tool stocker 1 is disposed at one end of the machine tool 100 in the first direction DR1, and the opening portion 121, through which the workpiece can be carried into the machining area, is disposed at one end of the machine tool 100 in the first direction DR1. In addition, in the example illustrated in FIG. 37, it is possible to change the position of the tool temporary placement table 4 between a backward position Q1, where the first support section 41 is retracted into the magazine 2, and a use position Q2, where the first support section 41 is exposed from the magazine 2 (see FIG. 5).

In a case where both the opening portion 121 and the first opening portion OP1 are provided on the front surface FS, the moving distances of the operator who carries the tool in and out and carries the workpiece in and out is shortened. In addition, it is possible to retract the tool temporary placement table 4 to the backward position Q1, the tool temporary placement table 4 does not obstruct the movement of the operator.

Alternatively, the first opening portion OP1 of the tool stocker 1 may be provided on the rear surface. In other words, the first opening portion OP1 of the tool stocker 1 may be disposed at an opposite end of the opening portion 121, through which the workpiece can be carried into the machining area.

### (Workpiece Holder 101)

In the example illustrated in FIG. 38, the workpiece holder 101 includes: a chuck 101a, which holds the workpiece W; and a chuck rotator 101b, which rotates the chuck 101a about a rotation axis. Alternatively, or additionally, the workpiece holder 101 may include a table that supports the workpiece. The workpiece holder 101 may also include a table rotator that rotates the table about a rotation axis.

### (Machining Head 103)

In the example illustrated in FIG. 38, the machining head 103 includes a rotation driver 103b, which rotates the tool T about an axis (hereinafter, referred to as a "fourth axis AX4"), which is parallel to the longitudinal directions of the tool. In the example illustrated in FIG. 38, the tool T, which rotates about the fourth axis AX4, comes into contact with the workpiece, and thus, the workpiece is machined by the tool T. Alternatively, a turning tool may be held on the machining head 103. In this case, while the workpiece W and the chuck 101a, which holds the workpiece W, are rotating about the rotation axis, the turning tool comes into contact with the workpiece W. In this manner, the workpiece W is machined by the turning tool.

### (Mover 105)

In the example illustrated in FIG. 38, the mover 105 includes a machining head mover 106, which moves the machining head 103. The machining head mover 106 may include a first linear mover 106a, which moves the machining head 103 along the vertical direction. Alternatively, or additionally, the machining head mover 106 may include a second linear mover 106b, which moves the machining head 103 along the horizontal direction. Alternatively, or additionally, the machining head mover 106 may include a tilter 106c, which tilts the machining head 103.

Alternatively, or additionally, the mover 105 may include a workpiece mover that linearly moves the chuck 101a, which holds the workpiece W (or a table that supports the workpiece W).

### (Automatic Tool Changer 107)

The machine tool 100 may include the automatic tool changer 107, which is capable of changing the tool T held by the machining head 103 with another tool taken out of the automatic tool changer 107. The automatic tool changer 107 may include a tool change arm 108. The tool change arm 108 includes: a first gripper 108a, which is capable of gripping one tool; and a second gripper 108b, which is capable of gripping another tool. The automatic tool changer 107 may also include an arm rotator 109a, which rotates the tool change arm 108, and an arm mover 109b, which linearly moves the tool change arm 108.

### (Controller 110)

As illustrated in FIG. 37, the machine tool 100 may include the controller 110, which controls the tool stocker 1 and the mover 105. The controller 110 may control the machining head 103 (more specifically, the rotation driver 103b). The controller 110 may also control the workpiece holder 101 (more specifically, the chuck rotator 101b). The controller 110 may control the automatic tool changer 107 (more specifically, the arm rotator 109a and the arm mover 109b).

As illustrated in FIG. 39, the controller 110 includes a hardware processor 111 (hereinafter, simply referred to as a "processor 111"), a memory112, a communication circuit 114, and an inputter 116t (for example, a display 116, which is equipped with a touch panel). The processor 111, the memory 112, the communication circuit 114, and the inputter 116t are connected with each other through a bus118. Data necessary for machining the workpiece W (examples including workpiece data including the shape data of the workpiece W and the machining position data of the workpiece W) may be input into the controller 110 via the inputter 116t, or may be input into the controller 110 from another computer through the communication circuit 114. It is to be noted that the inputter 116t is not limited to the display 116, which is equipped with a touch panel. For example, the controller 110 may include: an inputter such as a button, a switch, a lever, a pointing device, or a keyboard; and a display for displaying data that has been input into the inputter or any other information.

The controller 110 executes a machining program PM, which is stored in the memory 112, and generates a plurality of control commands. In addition, the communication circuit 114 transmits the plurality of control commands that have been generated by the controller 110 to a to-be-controlled devices including the mover 105. In this manner, the controller 110 is capable of controlling the to-be-controlled device including the mover 105.

The controller 110 may control the tool stocker 1, the mover 105, and the automatic tool changer 107. For example, by executing the machining program PM, which is stored in the memory112, the controller 110 transmits a tool turn command S1 to the tool stocker 1 (more specifically, the first mover 51 and/or the second mover 53), transmits a movement command S2 to the mover 105 (more specifically, the machining head mover 106), and transmits a tool change command S3 to the automatic tool changer 107, via an amplifier (not illustrated in FIG. 39).

The tool stocker 1 (more specifically, the first mover 51 and/or the second mover 53), which receives the tool turn command S1, moves a first designated tool designated by the machining program PM toward the automatic tool changer 107. The mover 105 (more specifically, the machining head mover 106), which receives the movement command S2, moves the machining head 103 toward the automatic tool changer 107. The automatic tool changer 107, which receives the tool change command S3, changes the tool held by the machining head 103 to the first designated tool that has been taken out of the tool stocker 1.

In the example illustrated in FIG. 39, the memory112 includes a stocked tool database 112a. The stocked tool database 112a stores tool data DT of each of the plurality of tools that are stocked in the magazine 2.

In the example illustrated in FIG. 39, the controller 110 is capable of communicating with the operation panel 6. For example, the controller 110 receives the tool data DA that has been read by the ID reader 49a from the operation panel 6. The controller 110 registers the tool data DA that has been received from the operation panel 6 in the stocked tool database 112a, or stores the tool data DA in the memory112, as the data to be registered in the stocked tool database 112a. In the latter case, later, after an approval operation by the operator, the tool data DA is registered in the stocked tool database 112a.

For example, in response to a request from the operation panel 6, the controller 110 transmits the list LT of the plurality of tool that are stoked in the magazine 2. A processor 6p of the operation panel 6 displays, on the display 60, the list LT that has been received.

For example, the operation panel 6 transmits the tool data DA that has been read by the ID reader 49a to the controller 110, as the tool data indicating the tool to be carried into the magazine 2. In this case, the controller 110 registers the tool data DA that has been received from the operation panel 6 in the stocked tool database 112a. Alternatively, the controller 110 may store the tool data DA that has been received from the operation panel 6 in the memory 112, as the data to be registered in the stocked tool database 112a. In this case, later, after an approval operation by the operator, the tool data DA is registered in the stocked tool database 112a.

For example, the operation panel 6 transmits the tool data DB that has been read by the ID reader 49a to the controller 110, as the tool data indicating the tool that has been carried out of the magazine 2. In this case, the controller 110 deletes the tool data DB that has been received from the operation panel 6 from the stocked tool database 112a. Alternatively, the controller 110 may store the tool data DB that has been received from the operation panel 6 in the memory112, as data to be deleted from the stocked tool database 112a. In this case, later, after an approval operation by the operator, the tool data DB is deleted from the stocked tool database 112a.

The present invention will not be limited to the above-described and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

### Reference Signs List

1, 1A ... Tool stoker, 2 ... Magazine, 4 ... Tool temporary placement table, 4w ... Lower end portion of tool temporary placement table, 6 ... Operation panel, 6p ... Processor, 6w ... Lower end of operation panel, 21 ... Frame structural body, 23 ... Rear surface of magazine, 27p ... Locked portion, 29 ... Guide rail, 31 ... First door, 33 ... Second door, 40a ... Upper surface of tool temporary placement table, 41 ... First support section, 41p ... First pocket, 43 ... Second support section, 43p ... Second pocket, 48 ... Handle, 48c ... Recessed handle, 49a ... ID reader, 49b ... Second ID reader, 51 ... First mover, 53 ... Second mover, 60 ... Display, 60t ... Display equipped with touch panel, 61 ... First switch, 62 ... Emergency stop button, 63 ... Manual operation selection switch, 64 ... Changeover switch, 65 ... Unlock switch, 66 ... Tool number input key, 67 ... Tool number display, 68 ... Designated tool indexing key, 69a ... First display lamp, 69b ... Second display lamp, 71 ... Forward rotation key, 72 ... Reverse rotation key, 74a ... Tool attachment tab, 74b ... Tool detachment tab, 75 ... First button, 76 ... Second button, 77 ... Display, 81 ... Tool number, 82 ... Tool name, 83 ... Tool size, 90 ... Storage rack, 91 ... Shelf, 91a ... First shelf, 91b ... Second shelf, 93 ... Magnet, 95 ... Damper, 97 ... Lock component, 97h ... Hexagonal hole portion, 97p ... Locking piece, 100 ... Tool machine, 101 ... Workpiece holder, 101a ... Chuck, 101b ... Chuck rotator, 103 ... Machining head, 103b ... Rotation driver, 105 ... Mover, 106 ... Machining head mover, 106a ... First linear mover, 106b ... Second linear mover, 106c ... Tilter, 107 ... Automatic tool changer, 108 ... Tool change arm, 108a ... First gripper, 108b ... Second gripper, 109a ... Arm rotator, 109b ... Arm mover, 110 ... Controller, 111 ... Processor, 111 ... Hardware processor, 112 ... Memory, 112a ... Stocked tool database, 114 ... Communication circuit, 116 ... Display equipped with touch panel, 116t ... Inputter, 118 ... Bus, 121 ... Opening portion, 123 ... Door, 211 ... First wall, 211a ... Partition, 213 ... Second wall, 214 ... First upper frame, 215 ... First lower frame, 216 ... Third wall, 217 ... Second upper frame, 218 ... Second lower frame, 311 ... Outer side portion of first door, 313 ... Inner side portion of first door, 317 ... First transparent window, 319 ... First handle, 331 ... Outer side portion of second door, 333 ... Inner side portion of second door, 337 ... Second transparent window, 339 ... Second handle, 410u ... Upper end of first support section, 511 ... First chain, 513 ... First sprocket, 515 ... First motor, 531 ... Second chain, 533 ... Second sprocket, 535 ... Second motor, AR1 ... Arrow, AR2 ... Arrow, AX1 ... First axis, AX2 ... Second axis, AX3 ... Third axis, AX4 ... Fourth axis, CB ... Cable, D ... Indexing position, D1 ... First indexing position, D2 ... Second indexing position, DA ... Tool data, DA1 ... Tool data of first tool, DM1 ... First movement direction, DM2 ... Second movement direction, DM3 ... Third movement direction, DM4 ... Fourth movement direction, DR1 ... First direction, DR2 ... Second direction, DT ... Tool data, FS ... Front surface, GL1 ... First guide rail, GL2 ... Second guide rail, HA ... Holder, HA1 ... First holder, HB ... Holder, HB1 ... Second holder, LN ... Straight line, LT ... List, OB1 ... First track, OB1-1 ... Circular arc track, OB2 ... Second track, OE1 ... Movement track of first door, OE2 ... Movement track of second door, OP1 ... First opening portion, OP2 ... Second opening portion, P1 ... First position, P2 ... Second position, P3 ... Third position, P4 ... Fourth position, PM ... Machining program, Q1 ... Backward position, Q2 ... Use position, R1 ... First rotation direction, R2 ... Second rotation direction, RG1 ... First region, RG2 ... Second region, S1 ... Tool turn command, S2 ... Movement command, S3 ... Tool change command, SP1 ... Storage space, T ... Tool, T1 ... First tool, T2 ... Second tool, TE ... Tip end portion, Th ... Tool holder, TM ... Tool body, TS ... Shank, W ... Workpiece, e1 ... Upper end of first support section, e2 ... Lower end of first opening portion, e3 ... Lower end of first track, e4 ... End of first track in first direction

## Claims

1. A tool stocker comprising:
a magazine that stores a plurality of tools respectively held by a plurality of holders movable along a first track;
a first opening portion which is formed in the magazine and through which a first tool passes when the first tool is carried into the magazine;
a first door configured to open and close the first opening portion; and
a tool temporary placement table comprising a first support section configured to support the first tool,
wherein the tool temporary placement table is disposed to be lower than the first opening portion, and is supported by the magazine.

2. The tool stocker according to claim 1, further comprising an operation panel for operating the magazine,
wherein the magazine comprises a first wall that defines one side portion of the first opening portion, and
wherein the operation panel is disposed on the first wall.

3. The tool stocker according to claim 1, further comprising:
a second opening portion formed in the magazine;
a second door configured to open and close the second opening portion; and
a partition disposed between the first opening portion and the second opening portion,
wherein when the tool temporary placement table is positioned at a use position, the first support section is positioned in front of the partition in a plan view.

4. The tool stocker according to claim 3,
wherein an outer side portion of the first door is supported by the magazine so as to be turnable about a first axis substantially parallel to a vertical direction,
wherein an outer side portion of the second door is supported by the magazine so as to be turnable about a second axis substantially parallel to the vertical direction,
wherein when the tool temporary placement table is positioned at the use position, the first support section is positioned outside a movement track of the first door in the plan view, and
wherein when the tool temporary placement table is positioned at the use position, the first support section is positioned outside a movement track of the second door in the plan view.

5. The tool stocker according to claim 3 or 4, further comprising an operation panel for operating the magazine,
wherein the operation panel is disposed on the partition.

6. The tool stocker according to one of claims 3 to 5,
wherein the magazine comprises:
a first holder configured to move along the first track and hold the first tool; and
a second holder configured to move along a second track and hold either the first tool or another tool,
wherein the first door is configured to open and close the first opening portion, which allows access to the first holder, and
wherein the second door is configured to open and close the second opening portion that allows access to the second holder.

7. The tool stocker according to one of claims 3 to 6,
wherein a position of the tool temporary placement table is changeable between a backward position where the first support section is retracted into the magazine, and the use position where the first support section is exposed from the magazine.

8. The tool stocker according to claim 1,
wherein a position of the tool temporary placement table is changeable between a backward position where the first support section is retracted into the magazine, and a use position where the first support section is exposed from the magazine,
wherein the magazine comprises a first wall that defines one side portion of the first opening portion, and
wherein when the tool temporary placement table is positioned at the use position, the first support section is positioned in front of the first wall in a plan view.

9. The tool stocker according to one of claims 1 to 8,
wherein the tool temporary placement table comprises an identification (ID) reader configured to read an ID for identifying the first tool placed on the first support section.

10. The tool stocker according to one of claims 1 to 9,
wherein the tool temporary placement table is supported by the magazine so as to be tiltable about an axis substantially parallel to a horizontal plane.

11. The tool stocker according to one of claims 1 to 10,
wherein the first track includes a circular arc track,
wherein a storage space for the tool temporary placement table is formed in the magazine, and
wherein the storage space is disposed in a region in a vicinity of the circular arc track.

12. The tool stocker according to one of claims 1 to 11,
wherein the tool temporary placement table comprises a second support section configured to support a second tool.

13. A machine tool comprising:
a workpiece holder that supports a workpiece;
a machining head capable of holding a tool for machining the workpiece;
a mover that moves the machining head relative to the workpiece holder; and
a tool stocker,
wherein the tool stocker comprises:
a magazine that stores a plurality of tools respectively held by a plurality of holders movable along a first track;
a first opening portion which is formed in the magazine and through which a first tool passes when the first tool is carried into the magazine;
a first door configured to open and close the first opening portion; and
a tool temporary placement table comprising a first support section configured to support the first tool, and
wherein the tool temporary placement table is disposed to be lower than the first opening portion, and is supported by the magazine.

14. The machine tool according to claim 13, further comprising:
an opening portion that enables the workpiece to be carried into a machining area; and
a door configured to open and close the opening portion,
wherein in a case where a front side is defined as one side where the opening portion is present, the first opening portion of the tool stocker is provided on the front side, and
wherein a position of the tool temporary placement table is changeable between a backward position where the first support section is retracted into the magazine, and a use position where the first support section is exposed from the magazine.

15. The machine tool according to claim 13 or 14, further comprising a controller configured to control the tool stocker and the mover,
wherein the tool stocker comprises:
an identification (ID) reader configured to read tool data including an ID for identifying the first tool; and
an operation panel for operating the magazine,
wherein the controller is configured to communicate with the operation panel, and
wherein the controller receives, from the operation panel, the tool data read by the ID reader.
